(19) Europäisches Patentamt / European Patent Office / Office européen des brevets

(11) **EP 4 471 385 B1**

(12) **EUROPEAN PATENT SPECIFICATION**

(45) Date of publication and mention
of the grant of the patent:
**03.09.2025 Bulletin 2025/36**

(21) Application number: **23020258.2**

(22) Date of filing: **29.05.2023**

(51) International Patent Classification (IPC):
**G01F 1/80** *(2006.01)* **G01F 25/10** *(2022.01)*

(52) Cooperative Patent Classification (CPC):
**G01F 1/80; G01F 25/10**

(54) **FUNCTIONAL METHOD OF LINEARIZING THE DEPENDENCE OF THE FORCE EXERTED ON THE REACTION ELEMENT OF A FLOWMETER WITH THE FLOW RATE, AND LINEAR REACTION FLOWMETER CONFIGURED ON THE BASIS OF THAT METHOD**

FUNKTIONSVERFAHREN ZUR LINEARISIERUNG DER STRÖMUNGSKRAFTABHÄNGIGKEIT AUF DAS REAKTIONSELEMENT EINES DURCHFLUSSMESSGERÄTS UND DAMIT GEBILDETES LINEARES REAKTIONSMESSGERÄT

PROCÉDÉ DE LINÉARISATION DE LA DÉPENDANCE DE LA FORCE EXERCÉE SUR L'ÉLÉMENT DE RÉACTION D'UN DÉBITMÈTRE AVEC LE DÉBIT, ET DÉBITMÈTRE À RÉACTION LINÉAIRE CONFIGURÉ SUR LA BASE DE CE PROCÉDÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**04.12.2024 Bulletin 2024/49**

(73) Proprietors:
• **Motit, Horia Mihai**
  **021142 Bucuresti (RO)**
• **Balta, Florian**
  **011506 Bucuresti (RO)**

(72) Inventor: **Motit, Horia Mihai**
**021142 Bucuresti (RO)**

(74) Representative: **Strenc, Alexandru Cristian**
**Strenc Solutions for Innovation S.R.L.**
**Str. Lujerului Nr. 6**
**Bloc 100 Sc. B Et 3, Apt. 56 Sector 6**
**06631 Bucharest (RO)**

(56) References cited:
**EP-A1- 4 001 856      EP-A2- 3 364 159**
**EP-A2- 3 588 016**

**Description**

Present invention refers to the technical solution for defining a method of directly functional linearization of the dependence of the force exerted on a reaction element in the structure of a flowmeter on the flow rate, and its implementation by a block having a specific role called "linearizer", in the configuration of the structure of a reaction flowmeter, which, based on the new functional working principle, allows a precise measurement of the flow rate over extended ranges, practically for any working fluid in the industrial environment.

In the state of the art, there are known methods of linearizing the dependence, of a quadratic nature, between the flow rate measured by a flowmeter, and respectively the force developed on a reaction element in the structure of the flowmeter, thus called "reaction flowmeter"

Thus, in the patent document EP 4001856 "Reaction flowmeter without moving parts in individual, bypass and respectively extended configuration, and a method of flow measurement based on it", it is described a technical solution of a reaction flowmeter, in which a linear or quasi-linear dependence is realized between the output parameter of the flowmeter and the measured flow. Thus, a linearization solution is presented by means of a non-linear transformation cam of the reaction force (achieved in the opposite direction with the quadratic dependence of the reaction force on the flow rate) in the output parameter of the flowmeter so that the dependence between the output parameter and the measured flow rate $Q_m$ is thus linearized.

In its turn, the patent document WO 9702470 (A1) - "A total momentum flow meter" presents a linearization solution based on an installation consisting of two bent pipe elements connected to each other in an inverted relationship, so that a common device for measuring the reaction forces will detect the difference between the forces exerted on them. The installation also uses two sources of constant flow with opposite directions, located in parallel with the two pipes, in order to linearize the dependence of the output parameter on the flow so that if the sources of constant flow ensure a constant volumetric flow, then the flowmeter will be linear with respect to the mass flow and if the constant flow sources provide a constant mass flow, then the flowmeter is linear with respect to the volumetric flow. The presented linearization solution is complicated from a technical point of view, constructively cumbersome, assuming bends, piping, bottlenecks as well as functionally, containing: two reaction tubes, two flow sources, force sensor, which in the last instance does not represent a flow meter in itself, but rather a complex flow measurement installation.

All these solutions have the disadvantage that they start from the use of reaction elements whose geometric configuration maintains, constant with respect to the flow rate, both the area of the inlet nozzle and that of the outlet nozzle, the functional equation being of quadratic dependence of the reaction force against of the measured flow rate, which causes a reduced value of the extension of the flow rate measurement range to be obtained.

Bescause of this, trying to reduce this functional structural handicap, the technical solutions known up to now involve complicated technical solutions, with limited uses, and cumbersome and expensive constructive configurations and achievements, or simpler configurations but exposed to the diminishing of the measurement interval and/or the measurement precision, due to the potential deviation from linearization through execution and/or wear of their components.

Technical problem solved by the present invention consists in a significant extension of the range (respectively of the turndown) of accurate flow measurement by a flow meter, for a very wide range of fluids, by directly transforming the mode of operation of the reaction element of the flow meter, defined by the functional equation of the quadratic dependence between the reaction force and the measured mass flow rate, and linearizing it by implementing in its structure of a block with a specific role, called " linearizer", which ensures the modification of the role of a component parameter of it, from a constant parameter to a variable parameter, proportional to the inverse of the measured flow rate, and changing accordingly, in a correlated way, the role and configuration of the outlet nozzle of the reaction element, from a nozzle with a constant area to a nozzle with a variable area depending on the flow rate.

The functional method of linearization, according to the invention, is based on the appropriate insertion in the structure of a reaction flowmeter, of a specific functional element called "linearizer", which allows establishing an expression, inherently and directly linear, between the force exerted on the reaction element and the measured flow rate.

The prerequisite of the proposed linearization consists in defining, on the one hand, that profile of the "linearizer" that allows the transformation of some parameters defining the functional equation of the reaction flowmeter, from basically constant parameters to variable parameters dependent on the measured flow rate, which allow the "intrinsic" linearization of the dependence relationship between the force exerted on the reaction element in the flowmeter structure and the measured flow rate, and on the other hand, the definition of the interrelationship and connection parameters with the other blocks in the flowmeter structure, which allow the linearizer to be inserted into an optimized configuration of the reaction flowmeter.

The functional method of linearizing the dependence of the reaction force on the flow rate and the reaction flowmeter configured based on the method, according to the invention, present the following advantages.

It ensures a significant increase, to a value equal to the square of the value of the turndown (the extension of the flow rate measurement range), related to the reaction flowmeters, known up to now having the non-linear dependence of the reaction force on the measured flow rate, changing the configuration of the reaction element of the reaction flowmeter, by transforming the role and configuration of its outlet nozzle, from a constant area nozzle, to a variable area nozzle, with the flow rate, thus ensuring the directly functional linearization, of the dependence of the reaction force, compared to the flow rate of the fluid that generates it, upon its passage through the reaction element.

In this way, are eliminated multiple disadvantages related to linearization solutions, known up to now, which arise from the use of one or a combination of reaction elements with a non-linear dependence between the reaction force and the flow rate that produces it, when crossing it/them, to which an additional functional diagram is attached, that ensures by various processing options the linearization of the dependence of the output parameter of the flowmeter (and not of the reaction force), compared to the measured flow rate.

The reaction flowmeter configured based on the proposed linearization method, presents in its structure, in addition to some blocks and functional elements specific to a reaction flowmeter, known in itself, a totally innovative solution of the outlet nozzle with variable area from the reaction element, containing a linearization element called "linearizer" which, in order to effectively achieve a linear dependence between reaction force and flow rate, imposed besides the definition of the geometric profile and its functional-constructive coupling in the structure of the flow meter, also the realization of the coupling of the reaction tube with a moment transducer that ensures, by balancing the reaction moment, both its measurement and the angular positioning of the reaction element, implicitly of the variable area of the nozzle exit of the reaction element.

The use in the structure of the flowmeter made based on said method, as a transducer of the reaction moment, of a moment transducer with gravimetric balancing, provided with the correction with the temperature and pressure of the fluid, of the volume of the ballast pieces, and corresponding to their weight, with the Archimedean force of fluid, has the advantage of being used for a very wide range of liquids, including aggressive physico-chemical ones, used at pressures and temperatures in a wide range of values, unlike the some currently known flowmeters that use a moment transducer with elastic balancing, usable only for water and non-aggressive gases at very low pressures.

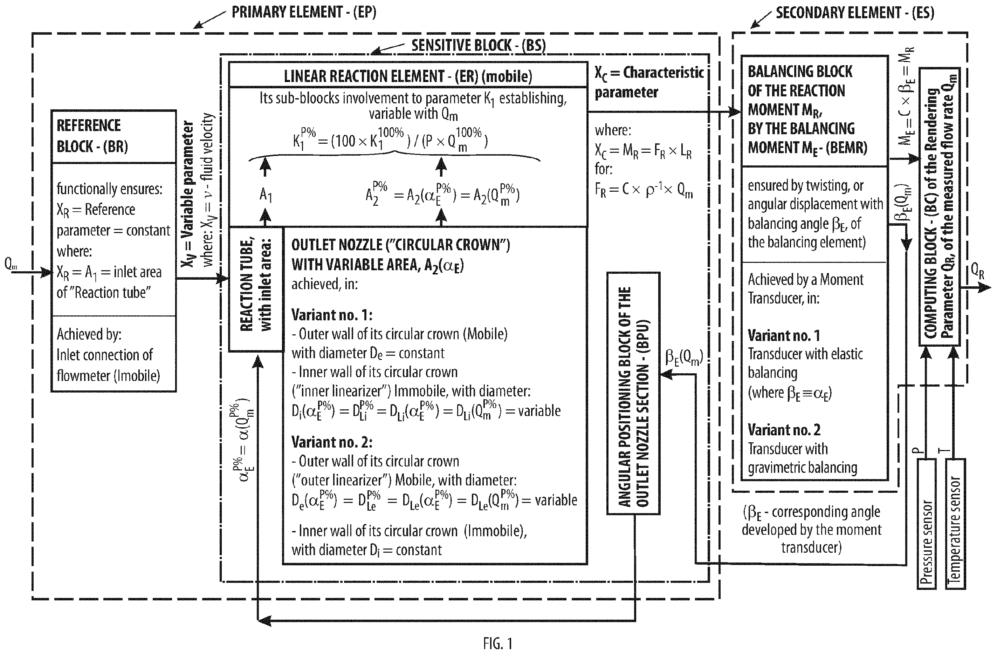

An embodiment the method of functional linearization of the force dependence applied on the reaction element of a flowmeter on the measured flow rate, is given below, and of the flowmeter structure configured based on the method, in connection with figures 1...6, which represent:

Fig.1 Basic structural diagram of reaction flowmeters, with the linearization of the dependence of the reaction force exerted on the reaction element against the flow rate

Fig.2 Reference structural diagram of the flowmeter with linear reaction, using a moment transducer with balancing by elastic torsion

Fig.3 Reference structural diagram of the flowmeter with linear reaction, using a moment transducer with gravimetric balancing

Fig.4 Longitudinal section through the flowmeter with linear reaction, using a moment transducer with balancing by elastic torsion

Fig.5 Longitudinal section through the linear reaction flowmeter, using a moment transducer with gravimetric balancing

Fig.6 Section with an A-A plane of the flowmeter from Fig.5.

The method ensures, in an intrinsically functional way, the linear dependence, with the mass flow rate of the fluid to be measured $Q_m$, of the reaction force $F_R$, generated when it passes through the reaction element of the flowmeter and applied to it, dependence that also establishes and the manner of measuring the force $F_R$, in order to determine the flow rate $Q_m$.

The method involves the successive completion of two stages.

The first stage establishes the analytical bases of the method, presented through its application algorithm.

The second stage establishes the basic structural scheme and the basic configurations of flowmeters with linear reaction, determined based on the considerations presented in the first stage of the method.

The first stage consists in going through, in their logical sequence, the following procedural steps, also explained through their analytical foundation.

Step 1 of the method has as its starting point the definition of the currently known reference equations, related to flowmeters with non-linear reaction, from which it started for the development of the present method of linearization of the dependence between the mass flow rate and the reaction force generated by it, when passing the fluid through the reaction element of the flowmeter, respectively:

- The functional equation of the flowmeter with non-linear reaction:

$$F_R = k_1 \times \rho^{-1} \times Q_m^2 \quad (1) \quad \text{(Bibliographic Reference 1)}$$

where:

$F_R$ - reaction force;
$\rho$ - density of the measured fluid;
$Q_m$ - measured mass flow rate;
$k_1$ - constructive parameter = constant, which has the expression:

$$k_1 = 1/A_2 + 0,5 \times (A_2/A_1^2 - 1/A_2) \quad (2) \quad \text{(Bibliographic Reference 1)}$$

where:

$A_1$ - the area of the outlet from the inlet connection of the flowmeter, respectively of the inlet to the reaction tube;
$A_2$ - outlet area from the reaction tube;
Additionally, the parameters that will be used in the following considerations are now presented, respectively:

$Q_m^{P(\%)}$ - the value of the current mass flow measured, expressed, with reference to its percentage value $P(\%)$ compared to the value of the maximum flow $Q_m^{100\%}$, which has the expression:

$$Q_m^{P(\%)} = P \times Q_m^{(100\%)} / 100 ; \quad (3)$$

$\alpha_E^{(P\%)} = \alpha_E (Q_m^{P\%})$ - the angle of rotation of the reaction tube, corresponding to the balancing, by the moment transducer, of the reaction moment $M_R^{P\%} = F_R^{P\%} \times L_R$, of the reaction force $F_R^{P\%}$ ( having the arm $L_R$ ), generated by the mass flow rate $Q_m^{P(\%)}$;
$\beta_E^{P(\%)} = \beta_E (Q_m^{P\%})$ - the rotation angle of the sensitive element of the moment transducer, corresponding to which it, developing the balancing moment $M_E^{P\%} = c \times \beta_E^{P(\%)}$ (where c - constructive constant), ensures the measuring of the reaction moment $M_R^{P\%}$ by balancing it, respectively $M_E^{P\%} = M_R^{P\%}$.

At step 2, starting from the previous determination (Bibliographic Reference 1) of the analytical expression (2) of the parameter $k_1$, the present method ensures the change of its role, from the constant parameter $k_1 = ct$, to the parameter $k_1^{P\%}$, variable depending on the flow rate value, according to the relationship:

$$k_1^{P(\%)} = (100 \times k_1^{100\%}) / (P \times Q_m^{100\%}) \quad (4)$$

where:

$Q_m^{100\%}$ - maximum flow rate ;

$k_1^{100\%}$ - the value of the parameter k1 corresponding to the maximum flow rate.

Ensuring, functionally - constructively, the value of $k_1^{P(\%)}$ according to expression (4), determines the achievement of the linear dependence between $F_R$ and $Q_m$, this being demonstrated by replacing the parameter $k_1$ with $k_1^{P(\%)}$ in relation (1).

This results in the expression:

$$F_R^{P(\%)} = [100 \times k_1^{100\%} \times \rho^{-1} \times (Q_m^{P\%})^2] / (P \times Q_m^{100\%}) \quad (5)$$

By processing, it is obtained:

$$F_R^{P\%} = k_1^{100\%} \times \rho^{-1} \times Q_m^{P\%} \quad (6)$$

The relationship (6) demonstrates the assurance of the linear dependence between the force $F_R^{P\%}$ and the flow rate $Q_m^{P\%}$.

Next, step 3 considers the modification, as a consequence, of the role of the outlet nozzle of the reaction element, from a nozzle with a constant area ($A_2$ = constant), to a nozzle with a variable area with the flow rate $Q_m$, respectively $A_2 = A_2(Q_m)$.

In this sense, in order to determine the expression of the variable parameter $A_2$, the equation (2) is processed, with reference to $A_2$, by replacing $k_1$ with $k_1^{P(\%)}$, obtaining the equation:

$$A_2^2 - (2 \times A_1 \times k_1^{P(\%)}) \times A_2 + A_1^2 = 0 \qquad (7)$$

The solution of this equation, for values of $A_2$ in accordance with those of $A_1$, is the following:

$$A_2^{P\%}(Q_m) = k_1^{P(\%)}(Q_m) \times A_1^2 - A_1 \{ [k_1^{P(\%)}(Q_m) \times A_1]^2 - 1 \}^{1/2} \quad (8)$$

The solution requires avoiding the extraction of the radical from a negative value (respectively an irrational number), by imposing the condition:

$$k_1^{P(\%)}(Q_m) \times A_1 \geq 1 \qquad (9)$$

In step 4 of the method, the basic structural solution of the nozzle with variable area $A_2(Q_m)$, for the outlet of the reaction element, is configured.

The nozzle, according to the method, is configured by the fluidic coupling of two concentric parts, a mobile one together with the reaction tube to which it belongs, and the other being immobile fixed to the output connection of the flowmeter.

Thus now, the area $A_2 = A_2(Q_m)$ becomes the area of a circular crown with variable area, delimited on the outside by the inner wall (with diameter $D_e$) of the outlet of the reaction element, being part of it, and implicitly mobile together with it, rotating with the angle $\alpha_E^{P\%}(Q_m^{P\%})$ related to the symmetry axis of the rotation shaft (3) of the reaction tube (2).

This angular displacement of the reaction tube is determined by the rotation angle $\beta_E^{P\%}$ (of torsion or gravitational displacement) of the sensitive element of the moment transducer, angle for which the moment transducer develops the moment $M_E$ to balance the reaction moment $M_R$, by ensuring thus

$$M_E^{P\%} = M_R^{P\%} = F_R^{P\%} \times L_R,$$

(where $L_R$ is the arm of the force $F_R$) and implicitly its measurement.

On the inside, specific to the concept of the method, the area $A_2(Q_m)$ is delimited by the contour of a piece placed centrally, having the diameter $D_i$.

Consequently, the outlet nozzle of the reaction element has the general expression:

$$A_2(\alpha_E) = 0{,}24 \times \pi \times (D_e^2 - D_i^2) \qquad (10)$$

The method provides two versions of the variation of the area $A_2(\alpha_E)$ of the circular crown of the outlet nozzle of the reaction element, compared to the mass flow rate $Q_m$.

In the first version, compared to the variation of the flow rate $Q_m$, the outer diameter $D_e$ of the circular crown is kept constant, and the inner diameter $D_i$ varies with it.

In the second version, compared to the variation of the flow rate $Q_m$, the inner diameter $D_i$ of the circular crown is kept constant, and the outer diameter $D_e$ varies with it.

Thus, in the first variant, the circular crown with area $A_2(\alpha_E) = A_2(Q_m)$ is delimited on the outside by the inner wall (with diameter $D_e$ = constant ) of the outlet nozzle of the reaction element, being part of it, and mobile with it, rotating with the angle $\alpha_E^{P\%}(Q_m^{P\%})$, corresponding to the angle $P_E^{P\%}$, of rotating the sensitive element of the moment transducer, for which balancing $M_E^{P\%} = M_R^{P\%}$ is ensured.

On the inside, the circular crown with area $A_2(Q_m)$ is delimited by a centrally positioned part (named, due to its functional role, "inner linearizer"), having the contour profiled with the diameter $D_i^{P\%}$, variable corresponding to the angular position $\alpha_E^{P\%}$ (related to the flow rate $Q_m^{P\%}$) of the plan in which the area $Q_m^{P\%}$) is located (and implicitly $D_i^{P\%}$), resulting in $D_i^{P\%} = D_{Li}(\alpha^{P\%}) = D_{Li}(Q_m^{P\%})$.

The symmetry axis of the "inner linearizer" is the same as the axis on which the center of the exit section of the reaction tube is positioned, in its angular displacement, together with it, being slightly curved with the radius $R_C$, the radius whose center is in the symmetry axis of the rotation shaft of the reaction tube.

The "inner linearizer" is immobile, being centrally placed rigidly against to the inlet nozzle, of the outlet connection of the flowmeter.

Thus, the necessary value of the corresponding area $A_2{}^{P\%} = A_2(\alpha_E{}^{P\%})$, is obtained, according to relation (8), related to the angular position $\alpha_E{}^{P\%}$ of the measuring section, (respectively of the reaction tube), which in turn determines, for the parameter $k_1$, the value $k_1{}^{P\%}$, which ensures the linear dependence of the force $F_R$ on the flow rate $Q_m$, according to relation (6).

The fluid coming out of the nozzle of the reaction element is taken over by the inlet nozzle of the outlet connection 6 of the flowmeter.

In the second variant, the area $A_2(a_E) = A_2(Q_m)$ is delimited on the outside by the inner wall (with the diameter $D_e = D_{Le}{}^{P\%} = D_{Le}{}^{P\%}(\alpha_E{}^{P\%})$ of the exit of the reaction tube, being part of it, and movable with it, rotating with the angle $\alpha_E{}^{P\%}$ ($Q_m{}^{P\%}$),, angle corresponding to ensuring balancing $M_E{}^{P\%} = M_R{}^{P\%}$.

Due to its functional role, this inner exit wall of the reaction tube is called "outer linearizer", its diameter $D_{Le}{}^{P\%}$, being located in the plane of the area $A_2{}^{P\%} = A_2(a_E{}^{P\%})$, plane related to the exit section of the tube of reaction, having the angular position $\alpha_E(Q_m{}^{P\%})$.

On the inside, the area $A_2(Q_m)$ is delimited by the outline of a piece, positioned centrally, concentric with the «external linearizer», and having the axis of symmetry slightly curved with the radius $R_C$, the radius whose center is in the of symmetry axis of the rotation shaft of reaction tube.

This part is immobile, being placed in the center of the inlet nozzle of the outlet connection of the flow meter.

The axis of symmetry of the "outer linearizer" is the same as the axis on which the center of the exit section of the reaction tube is positioned, in its angular displacement together with it, being identical to the axis of symmetry of the immovable inner part, positioned centrally.

Similar to the first variant, the area $A_2{}^{P\%} = A_2(Q_m{}^{P\%}) = A_2(\alpha_E{}^{P\%})$,, related to the exit section of the reaction element, depends on the angular position $\alpha_E{}^{P\%}$ of its section, respectively of the reaction tube.

The value of the angle $\alpha_E{}^{P\%}$ is the one at which the rotation of the reaction tube stops, when the moment transducer balances the reaction moment $M_R$, respectively when $M_E{}^{P\%} = M_R{}^{P\%}$.

The fluid coming out of the nozzle of the reaction element is taken over by the inlet nozzle of the outlet connection of the flow meter.

Step 5 of the method considers the establishment of the profile of the linearizer.

The profile of the linearizer is characterized by the coordinates $\alpha_E{}^{P\%}, D_L{}^{P\%}$.

Following the same systematic presentation, their meaning is reiterated, respectively:

$a_E{}^{P\%}(Q_m{}^{P\%})$ - angular position of the plane of the exit section of the reaction tube, the plane where the area $A_2{}^{P\%} = A_2(Q_m{}^{P\%})$ is located

$D_L{}^{P\%}(A_2{}^{P\%})$ - the diameter of the linearizer, whose value is established according to $A_2{}^{P\%}$), with specific relationships, for each of the two variants of its realization, specified in Step 4 of this method of linearization.

In this sense, corresponding to the two achievement variants of the variable area $A_2(Q_m)$, the diameter of the "linearizer" has the following expressions:

- Variant no. 1 (with "inner linearizer")

$$D_{Li}{}^{P\%} = [D_e{}^2 - A_2{}^{P\%} / (0{,}25 \times \pi)]^{1/2} \qquad (11)$$

- Variant no. 2 (with "outer linearizer"):

$$D_{Le}{}^{P\%} = [D_i{}^2 + A_2{}^{P\%} / (0{,}25 \times \pi)]^{1/2} \qquad (12)$$

where:
$a_E{}^{P\%}, A_2{}^{P\%}, D_L{}^{P\%}$ are the functional parameters of the outlet nozzle of the reaction element, all depending in a correlated manner on the value of the measured current flow rate $Q_m{}^{P\%} = P \times Q_m{}^{100\%} / 100$.

According to step 6, the method requires the use, as a transducer of the reaction moment $M_R$ (where $M_R{}^{P\%} = F_R{}^{P\%} \times L_R$), which, by their working principle, ensure the measurement of the moment of force, balancing it, through an angular displacement $\beta_E{}^{P\%} = \beta_E(Q_m{}^{P\%})$, of their sensitive element (dependent of the flow rate), the balancing moment developed having the expression $M_E{}^{P\%} = c \times \beta_E{}^{P\%}$ (where c- constructive constant).

Thus, it is functionally ensured, in a unitary way, proportionally dependent on the flow variation $Q_m{}^{P\%}$ of the

flowmeter parameters with linear reaction, respectively: the angular displacement $\alpha_E{}^{P\%}$ of the reaction tube, and respectively the angular displacement $\beta_E{}^{P\%}$ of the sensitive element of the moment transducer, which ensures the balancing of the moment $M_R$, and correlated with these, the values of $A_2{}^{P\%}$ and $D_L{}^{P\%}$.

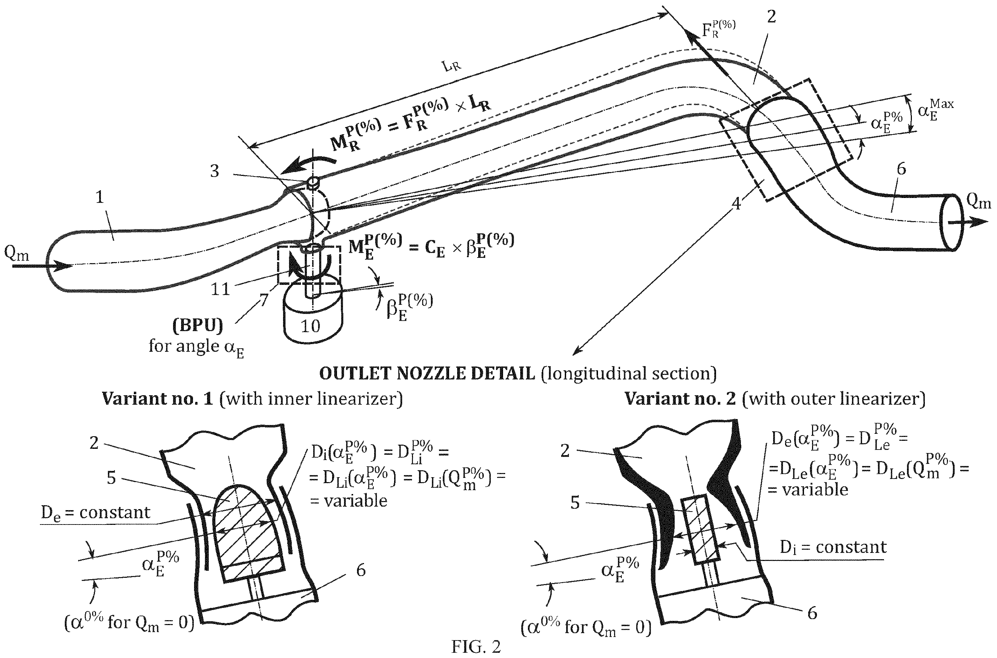

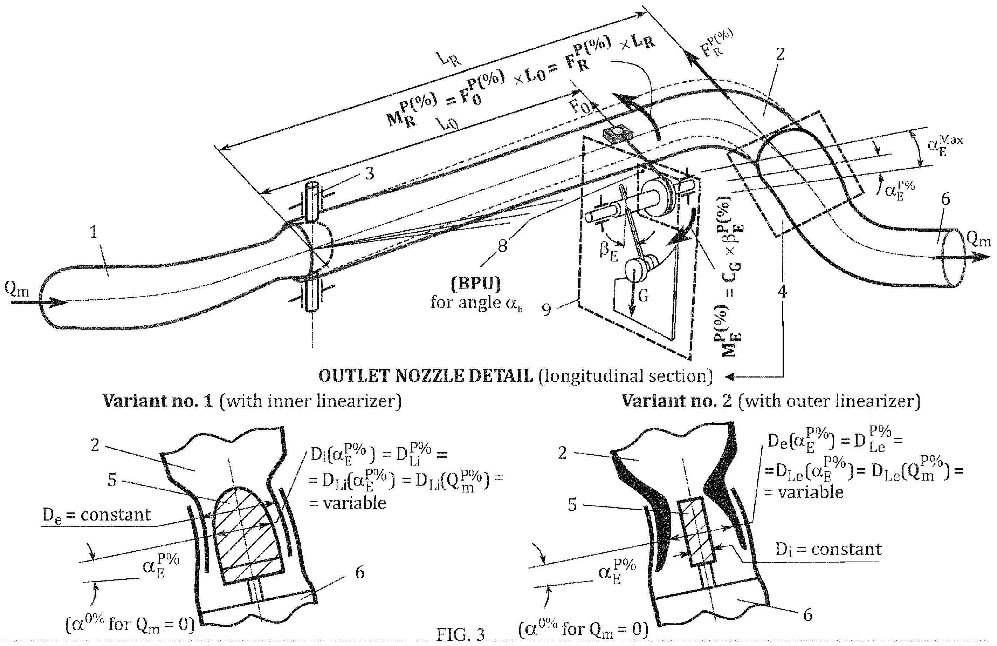

Next, in the second stage of the present method, both the basic structural diagram of the flowmeters with linear reaction (with reference to Fig. 1) is defined, as well as, correlated with it, their reference configurations (with reference to Fig.2 and Fig.3),of implementation the provisions stipulated in the first stage of the method.

We proceed to present the basic structural scheme (shown in Fig. 1), in parallel, with the reference configurations (indicated in Fig.2, respectively Fig.3) for a full explanation of their provisions.

Thus, the fluid with the flow rate to be measured $Q_m$ enters the flowmeter through the input connection (immobile) 1, which represents, from a structural point of view, the Reference Block (BR). It ensures, constructively and functionally, the constant value of the reference parameter $X_R$ of the flowmeter, compared to the flow rate variation.

With reference to the general flow equation $Q_m = A \times v \times \rho$, the reference parameter ensured by this type of flow meter is $X_R = A_1$, where $A_1$ is the exit area from the Reference Block (BR), implicitly also the entry area in the reaction tube 2 of the Reaction Element (ER), related to the second structural block of the flowmeter, the Sensitive Block (BS).

Corresponding to its defining relation, the variable parameter $X_V$, having the general expression $X_V = Q_m / X_R$ is achieved by $X_V = v$, where v, according to the specific configuration of the flowmeter with linear reaction, is the inlet velocity of the fluid in the reaction tube 2, being variable depending on the flow rate $Q_m$.

The Reference Block (BR), together with the Sensitive Block (BS), form the Primary Element (EP) of the flowmeter.

The fluid coming out of the inlet connection 1 passes through the reaction tube 2, which changes its flow direction to 90°, causing the reaction force $F_R$ of the fluid to appear, which acts on the reaction tube 2, causing a potential rotation with respect to its rotation shaft 3, the fluid continuing its flow, through the output nozzle 4, together with which it forms the Reaction Element (ER), and then through the output connection 6 of the flowmeter.

The constructive solutions, known up to now, related to flow meters with non-linear reaction, ensure the exit of the fluid from the reaction tube through a nozzle with a constant area ($A_2$ = constant) compared to the variation of the measured flow rate $Q_m$, the consequence of this configuration being the impossibility of changing the non-linear dependence of the force of reaction $F_R$ against the measured flow rate $Q_m$, according to relation (1), respectively $F_R = k_1 \times \rho^{-1} \times Q_m{}^2$, where the parameter $k_1$ is a constructive constant of the flowmeter.

In view of the current situation, we initially proceeded to determine the relationship (2), which achieved the analytical characterization of the $k_1$ parameter, the expression that explicitly demonstrated how it depends only on the $A_1$ and $A_2$ input and output areas related to the reaction element.

Then, starting from the knowledge of this analytical explanation of the $k_1$ parameter, it was developed the linearization method of the dependence of the reaction force $F_R$ on the measured mass flow rate $Q_m$, related to the flowmeters with reaction element.

In this sense, in order to change the role of the parameter $k_1$, from a constant parameter, to a variable parameter depending on the variation of the measured flow rate $Q_m$, the functional role of the outlet nozzle of the reaction element was changed, changing its functional structural scheme accordingly, thus so that its area $A_2$ is no longer constant related to the flow rate $Q_m$, but variable depending on it.

Thus, the basic structural diagram of these flowmeters in Fig.1, correlated with the graphic presentation in Fig.2 and Fig.3, indicates the configuration mode of the outlet nozzle 4 of the reaction element, achieved by the interstice (circular flow crown) of the fluid flowing between the outlet wall of the reaction tube 2 (on the outside), which is mobile, and a centrally positioned piece (on the inside), which is immobile and concentric with it.

The section of the outlet nozzle of the reaction element is located in the plane of the outlet end of the reaction tube, a plane characterized by its angular position $\alpha_E{}^{P\%} = \alpha_E(Q_m{}^{P\%})$, variable depending on the flow rate, the position for which is ensured the balancing of the reaction moment $M_R$, respectively $M_E = M_R$, the moment $M_E$ being obtained, either as an elastic balancing moment (according to Fig.2), or as a gravimetric balancing moment (according to Fig.3).

Area $A_2$ of the outlet nozzle has the angular position $\alpha^{P\%}$, related to the plane in which it is located, and has the shape of a circular crown.

This circular crown is delimited, in this plane, having the position $\alpha^{P\%} = \alpha_E(Q_m{}^{P\%})$, on the outside, by the inner diameter of the outlet wall of the reaction tube (movable wall together with the reaction tube to which it belongs), and on the inside-by the diameter of a piece 5 (immobile), placed in the center of the section, the concentric piece with the outer wall of the circular crown.

The two variants indicated by the method, to ensure the variation of the area of the circular crown of the outlet nozzle of the reaction element, provide for the following basic construction structures:

- Variant no. 1 (with "inner linearizer"): the circular crown having constant, the inner diameter of its outer wall, and variable with the measured flow rate, the diameter of its inner part (concentric with the outer wall), the part called "inner linearizer" ;

- Variant no. 2 (with "outer linearizer"), the circular crown having variable, with the measured flow rate, the inner diameter of its outer wall (the part called "outer linearizer"), and constant, the diameter of its inner part (concentric with the outer wall).

According to the reference configuration related to variant no. 1, this circular crown of the outlet nozzle has the mobile outer wall, together with the reaction tube, being characterized by the angular position $\alpha_E^{P\%}$ and the inner diameter $D_e$ = constant, related to the outlet reaction tube.

The inner wall of the circular crown is concentric with the outer one, being achieved by the specially profiled contour of the "inner linearizer" with the diameter $D_{Li}^{P\%} = D_{Li}(\alpha_E^{P\%})$ located in the plane with the angular position $\alpha_E$ $(Q_m^{P\%})$ of the output section, having the value established analytically, implicitely, depending on the angular position $\alpha_E$ $(Q_m^{P\%})$ of the plane of the outlet Section (mobile) of the outlet nozzle.

The symmetry axis of the "inner linearizer" is slightly curved, with the radius of curvature having the origin in the symmetry axis of the rotation shaft 3 of the reaction tube 2.

The reaction tube, and implicitly the plane of the outlet nozzle section, are mobile and characterized by the same angular positioning $\alpha_E$ $(Q_m^{P\%})$ .

The angle $\alpha_E$ $(Q_m)$, depends on the flow rate $Q_m$, characterizing the angular position of the reaction tube and implicitly the position of the outlet nozzle section, for which was ensured the balance between the reaction moment $M_R^{P\%}$, corresponding to the flow rate $Q_m^{P\%}$ and to the corresponding balancing (elastic or gravitational) moment $M_E^{P\%} = C \times \beta_E^{P\%}$, developed by the moment transducer, which thus implicitly measures it.

Now the area $A_2$ has become variable with the flow rate $Q_m$, being the area of the circular crown between the outer wall with the constant diameter $D_e$ = constant, and the inner one, with the variable diameter $D_{Li}^{P\%} = D_{Li}(Q_m^{P\%})$ .

Thus, particularizing the relationship (10), according to variant no. 1 of the outlet nozzle configuration, the area $A_2$ has the expression $A_2(\alpha_E) = 0{,}25 \times \pi \times [D_e^2 - D_{Li}(\alpha_E)^2]$, which details the dependence on of the angular position $\alpha_E = \alpha_E(Q_m)$, position which in its turn depends on the flow rate $Q_m$.

The profile of the "inner linearizer" is defined by the variation with $\alpha_E$ of the diameter $D_{Li}(\alpha_E)$, according to relationship (11), corresponding to the values of the area $A_2(\alpha_E)$, this area now becoming (through its dependence by $\alpha_E = \alpha_E(Q_m)$), a variable parameter with the flow rate $Q_m$.

The values determined for area $A_2$, analytically corroborated with that of the area $A_1$, provide for the parameter $k_1^{P\%} = k_1(Q_m^{P\%})$, (which in its turn became a variable parameter with the flow rate $Q_m$), the necessary corresponding values that ensure the linearization of the dependence of the reaction force $F_R$ on the flow rate $Q_m$, according to relationship (6), respectively $F_R^{P\%} = k_1^{100\%} \times \rho^{-1} \times Q_m^{P\%}$.

The Angular Positioning Block of the outlet nozzle (BPU), specified in the basic structural diagram shown in Fig. 1, ensures the establishment of the $\alpha_E$ value, of the angular positioning of the outlet nozzle section, depending on the $\beta_E$ value of the balancing angle (by elastic torsion, according to configuration 7 indicated in Fig.2, or by gravitational displacement, according to configuration 8, indicated in Fig.3), related to the moment transducer, which develops the moment $M_E = M_R$, balancing the reaction moment $M_R$.

The Angular Positioning Block of the outlet nozzle (BPU) according to the configuration 7, shown in Fig.2, is composed of the torsion bar 11 of the moment transducer 10, rigidly and co-axially coupled with the rotation shaft 3 of the reaction tube 2, ensuring thus, implicitly, the identity between the elastic balancing angle $\beta_E$ related to the elastic torsion of the bar 11 and the rotation angle $\alpha_E$ of the reaction tube 2, respectively $\beta_E = \alpha_E$.

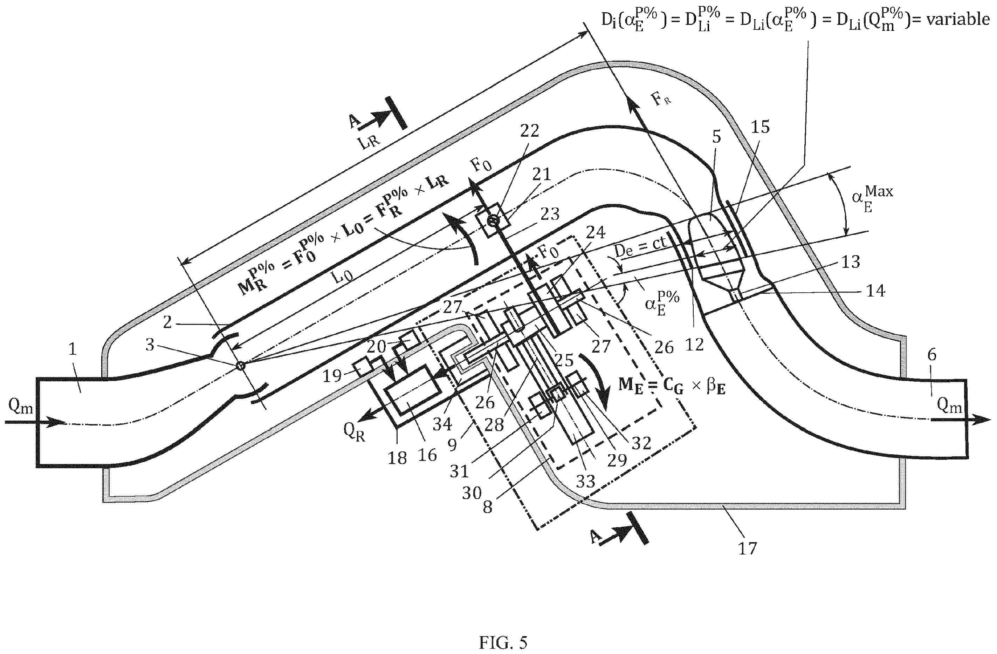

The Angular Positioning Block of the outlet nozzle (BPU) according to configuration 8, shown in Fig. 3, and Fig. 5, is composed of the flexible tape 23, fixed at one end by the screw 22, to the boss 21 of the reaction tube 2, it is rolled around the semicircumference of the disk 24, being fixed at the other end on the circumference of the disk 24, on the same rotation shaft and rigidly with it being also the hub 25, their assembly being able to rotate freely in the two bearings 26 (positioned left, right), placed on the two supports 27 (positioned left, right). The hub 25 is provided, perpendicular to its axis of symmetry, with a passage hole, also acting as a sliding bearing, for a rod 28, profiled at its lower end so that, on a shaft 29, fixed perpendicular to it, a mini-bearing 30, from stainless steel, is mounted . On the same shaft 29, symmetrically on one side and on the other side of the mini-bearing 30, two weights 31 and 32, equal to each other, are placed, with the surfaces protected against the physical-chemical action of the measured fluid.

The rod 28 rests, by the mini-bearing 30, on the cam 33, specially profiled, corresponding to its polar coordinates $\beta_E$, $R_c$, correlated according to relation (14).

The reaction tube 2, corresponding to the reaction force $F_R$ (with the force arm $L_R$), develops in the flexible tape 23 a force $F_0^{P\%}$, which determines the moment of rotation of the disc 24 (having a diameter D), with the expression $M_D^{P\%} = 0{,}5 \times F_0^{P\%} \times D = F_0^{P\%} \times L_0 = M_R^{P\%} = F_R^{P\%} \times L_R$ (thus, this moment being equal to the reaction moment), moment balanced by the gravimetric moment, of the opponent, developed by the apparent global weight, G (which resulted after correction with the Archimedean force of the measured fluid, of the weight of the entire system formed by the two weights 31 and 32, the mini-bearing 30, the shaft 29 and implicitly the rod 28), according to relation (13).

$L_G$, being the active length of the rod 28, which determines the gravimetric balancing, moment, (respectively its length from the axis of symmetry of the hub 25, to the axis of symmetry of the shaft 29, on which the two weights 31 and 32 are placed), because $L_G = R_C - R_0$, ($R_0$ being the radius of the mini-bearing 30), it turns out that it has the expression (15), which replaced in the relationship (13), determines the expression (16) of the gravimetric balancing moment $M_E$., thus proving that, this angular positioning block functionally ensures the linear dependence of the angular displacement $\beta_E$ of the weight-bearing rod 28 (displacement related to balancing the reaction moment $M_R$), both with the moment $M_R$ and also with the corresponding angular displacement $\alpha_E$, of the tube reaction, which it determines.

In conclusion, the Sensitive Block (BS) of the flowmeter with linear reaction generates at its output the characteristic parameter $X_C = M_R = F_R \times L_R$ ($L_R$ being the arm of the force $F_R$ ), which is applied to the Ballancing Block of the Reaction Element of the Reaction Moment (BEMR), related to the secondary element of the flow meter. According to its operating principle, this simultaneously generates two output parameters, namely the rotation angle $\beta_E$ ($Q_m$) related to $M_R$ balancing, and the balancing moment $M_E = M_R$, implicitly corresponding to this rotation angle.

The first output,parameter namely the angle of rotation $\beta_E$ ($Q_m$ ) is applied, according to what was previously specified, to the "Angular Positioning Block of the outlet nozzle" (BPU), which determines at its output the angular positioning $\alpha_E$ of its section, with area $A_2$.

Unlike variant no. 2, which uses a gravimetric balancing transducer 9 (according to Fig. 3), for variant no. 1 of making the Balancing Block of the Reaction Moment (BEMR), is used a moment transducer with balancing by elastic torsion 10 (according to Fig.2), for which, implicitly, equality $\beta_E = \alpha_E$ is ensured, because the torsion bar 11, related to the moment transducer 10, is fixed co-axially with the rotation shaft 3 of the reaction tube 2.

The other output parameter of the Balancing Block of the Reaction Moment (BEMR), namely the balancing moment $M_E$ is applied to the Computing Block of the Rendering Parameter $Q_R$ of the measured flow rate $Q_m$.

In order to ensure the correctness of the calculation of the flow rate related to the pressure and temperature of the measured fluid, the output signals of the pressure and temperature sensors, provided in this sense, by the method, are applied to the Computing Block of the Rendering Parameter the value $Q_R$ of the measured flow $Q_m$.

The previous presentation of the provisions of the basic structural scheme (shown in Fig. 1), related to the method, corroborated with those of the configurations indicated in Fig. 2 and Fig. 3, made with reference to Variant no. 1 of the structural configuration of the outlet nozzle with area $A_2$, variable, of the linear Reaction Element (ER), is mostly valid for its realization, having the outlet nozzle realized according to Variant no. 2 of configuration.

Consequently, only the differences determined by the specificity of this configuration variant will be specified.

The outer wall (called "outer linearizer") of the circular crown having area $A_2$, (as indicated in Fig. 1 and configured in Fig. 2 and Fig. 3) is mobile together with the reaction tube 2, to which it belongs, and has a specially profiled contour, characterized by the variation of the diameter $D_{Le}{}^{P\%} = D_{Le}(\alpha^{P\%})$ (located in the plane with the angular position $\alpha_E$ ($Q_m{}^{P\%}$ )) having the value, established according to the angular position $\alpha_E$ ($Q_m{}^{P\%}$ ) of the plane of the exit section (mobile) of the outlet nozzle, according to expression (12).

The inner wall of the circular crown is immobile and concentric with the outer one, having a cylindrical profile (with constant diameter $D_i$ = constant), with a slightly curved axis of symmetry. The radius of curvature of the axis of symmetry has its origin in the symmetry axis of the rotation shaft 3 of the reaction tube 2.

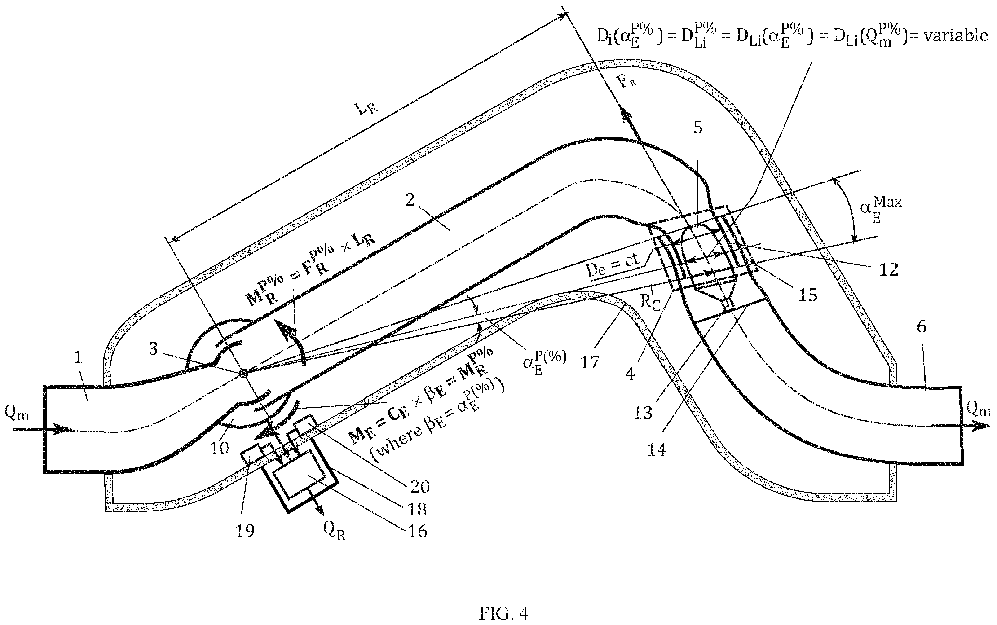

A first structural example of making a flowmeter with linear reaction, according to this method, is presented in Fig.4.

The flowmeter configuration with linear reaction shown in Fig. 4 partially reuses the configuration of the flowmeter with non-linear reaction, but introducing an essential modification.

The fluid to be measured enters the flowmeter through the inlet connection 1, continuing its flow through the reaction tube 2 (bent at $90^0$ at its other end), with which it is freely coupled through the shaft 3, which allows the rotation of the reaction tube 2 from inlet connection 1.

The essential modification, compared to the flowmeter with non-linear reaction, consists in replacing in the configuration of the reaction element, only of the reaction tube 2 (having the outlet nozzle with constant area $A_2$), with a new configuration of the reaction element. This new configuration is made up of the reaction tube 2 and the outlet nozzle 4 of the reaction element, nozzle that ensures the discharge of the fluid through the circular crown delimited, in the plane of the outlet section of the reaction tube, on the outside, by the inner circular dewall 12 of the end of the reaction tube, and on the inside, of part 5, specially profiled, called "inner linearizer", which is immobile, being fixed to the output connection 6, through the rod 13 and the support 14, and centrally positioned, concentric with the outer wall 12.

The outer wall 12, being part of the reaction tube 2, is mobile, rotating together with it with the angle $\alpha_E{}^{P(\%)}$, which is the angular position of the plane of the outlet section of the nozzle, implicitly of its exit area,

$A_2 = A_2(\alpha_E) = A_2(Q_m)$, proportional to the value of the reaction force $F_R{}^{P\%}$, corresponding the current value $Q_m{}^{P\%}$ of the measured flow rate, the angle at which the balancing of the reaction moment $M_R{}^{P(\%)} = L_R \times F_R{}^{P\%}$, by the moment $M_E = c \times \alpha_E$, developed by the moment transducer takes place.

In conclusion, the reaction element of the linear reaction flowmeter is constituted, on the one hand, by the reaction tube 2 and the outlet nozzle 4, which has the section with variable area A2, placed in the plane of the outlet section of the tube 2. On the other hand, the outlet nozzle 4 of the reaction element is formed by the fluidic coupling of the two parts 12 and 5, concentric and having the same axis of symmetry.

Taking over the fluid coming out of the nozzle of the reaction element is provided by the nozzle 15, which is immobile, and concentric with the nozzle 12, being fixed rigidly on the outlet connection 6 of the flow meter.

Inside the nozzle 12, positioned concentrically and centrally, (having the same curvilinear axis of symmetry with it) is placed the linearizer 5, which has a major contribution to achieving the linear dependence between the reaction force $F_R$ and the mass flow rate $Q_m$.

The three parts, the outer wall 12, the inner linearizer 5 and the nozzle 15 are positioned concentrically and symmetrically with respect to their common axis of symmetry, the axis which is slightly curvilinear with the radius of curvature $R_C$, which has its origin in the axis of symmetry of the shaft 3 and the end at the base of the inner linearizer 5, on its axis of symmetry.

The configuration of the presented flowmeter with linear reaction involves the incremental setting of the values of the parameter $k_1^{P(\%)}$ ( for P = 0,5...100), with reference to the value of the maximum flow rate to be measured $Q_m^{100\%}$. Then, corresponding to its values, are determined the related values of the area $A_2^{P\%}$, and consequently of the $D_{Li}^{P\%}$.

Thus is implicitly ensured the proportionality, with the value of the reaction force, of the rotation angle $\alpha_E^{P\%}$ of the reaction tube 2, for which the moment of the reaction force is balanced by the opposing moment of the moment transducer 10.

The reaction tube 2 is coupled with the moment transducer 10 (with elastic balancing), through the rigid and coaxial fixation of the shaft 3 of the reaction tube, with the torsion bar of the transducer 10.

The shaft 3 allows the rotation of the reaction tube 2, depending on the value of the measured flow rate $Q_m$, rotation that takes place until the angular position $\alpha_E^{P\%}$ is reached, corresponding to the balancing of the reaction moment $M_R^{P\%} = F_R^{P\%} \times L_R$, by the balancing moment $M_E^{P\%} = \alpha_E^{P\%} \times C_E$ (where $C_E$ is the constructive constant of elasticity, specific to the transducer, and $\alpha_E^{P\%} = \beta_E^{P\%}$, developed by moment transducer 10.

The moment transducer with elastic torsion 10 ensures, functionally, the linear dependence of the torsion of its sensitive element with the angle $\alpha_E = \beta_E$ (the angular displacement related to the balancing of the reaction moment $M_R$) for the balancing of the moment $M_R$, respectively the default setting itself of the value of the angular displacement $\alpha_E$ of the reaction tube, the implicit consequence of the rigid and collinear fixing of the torsion axis bar of the transducer to the shaft 3 of the reaction tube 2

Thus, the moment transducer 10 functionally determines two output parameters, on the one hand its torsion angle $\alpha_E^{P(\%)} = \beta_E^{P\%}$, corresponding to the measurement by balancing of $M_R$ (by ensuring $M_E = M_R$), and on the other hand, the electrical signal for rendering the value of the moment $M_R = M_E$, signal transmitted to the electronic block 16, of computing the parameter $Q_R$, and for rendering the value of the measured flow $Q_m$, block positioned outside the housing 17 of the flow meter, in its own housing 18.

Due to the configuration created, by correlating these constructive elements, the mass flow rate $Q_m^{P\%}$ determines the generation of a proportional reaction force $F_R^{P\%}$, which rotates the reaction tube 2 and implicitly the outer wall 12 of the nozzle of the reaction element, with the angle $\alpha^{P\%}$, corresponding to balancing the moment of the reaction force, by that developed by the moment transducer.

The flowmeter is provided with a pressure sensor 19 and a temperature sensor 20, whose signals are transmitted to the electronic block 16, thus correcting the calculation of $Q_m$, with the pressure and temperature of the measured fluid.

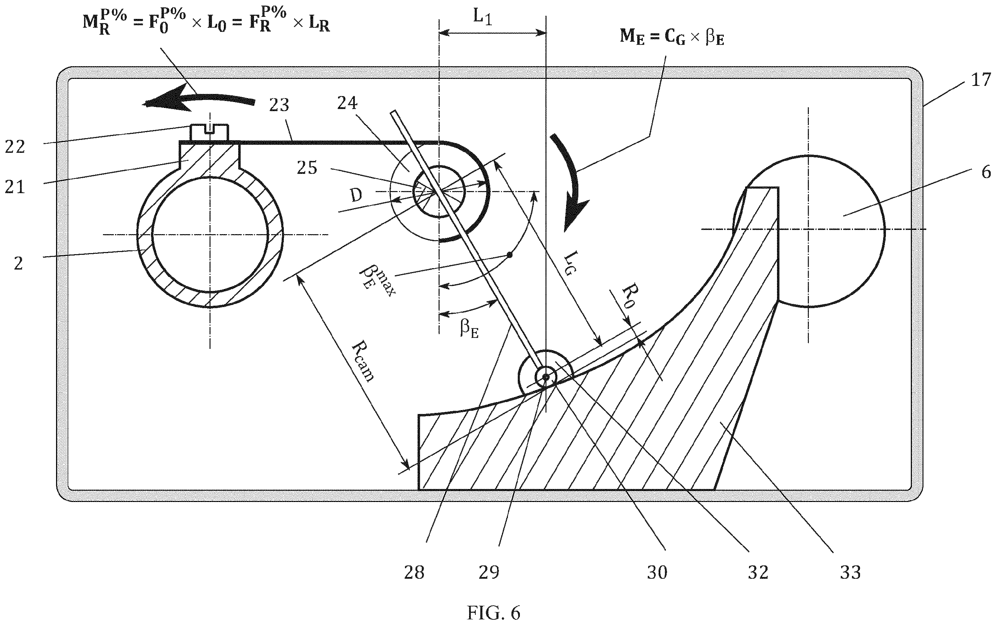

A second structural example of the flowmeter with linear reaction is shown in Fig. 5 and 6. ing The configuration of the flowmeter solution with linear reaction shown in Fig.5 is practically identical, from a fluidic point of view, to the one shown in Fig.4.

The difference between the two solutions consists in the way of taking the moment $M_R$ of the reaction force $F_R$, and measuring it by balancing it with a moment transducer, when it develops the opposing moment $M_E = M_R$.

Thus, the solution in Fig. 4 uses a moment transducer with elastic balancing of $M_R$, and the solution from Fig.5 and Fig. 6 uses a moment transducer with gravimetric balancing of $M_R$.

Consequently, the presentation of the solution in Fig.5 and 6 refers in particular to this structural specificity of the flowmeter with linear reaction, regarding the method of taking and measuring, by balancing of, the reaction moment $M_R$ and implicitly of the mass flow rate $Q_m$.

In this sense, for the coupling with the gravimetric moment transducer 9, the reaction tube 2 is provided, at its upper part, with a boss 21, with the median axis placed at a distance $L_0$ from the axis of symmetry of the shaft 3, boss in which is fixed by screw 22, flexible stainless tape 23.

The shaft 3 allows the rotation of the reaction tube 2, depending on the value of the measured flow rate $Q_m$, rotation that takes place until the angular position $\alpha_E$ is reached, corresponding to the balancing of the reaction moment $M_R^{P\%} = F_R^{P\%} \times L_R = F_0^{P\%} \times L_0$, by the moment $M_E^{P\%}$, of its balancing, moment developed by the moment transducer with gravimetric balancing 9.

The flexible tape 23 is rolled on the disk 24, on half of its circumference, being fixed at its other end to this disk, in the middle zone of its circumference.

The length of the tape 23 is established in such a way as to ensure the extension of its free portion (compared to its length, coresponding for the position of the reaction tube for $Q_m = 0$) unrolled on the disk 24, with the value $\Delta L = 2 \times L_0 \times \sin (0,5 \times \alpha_{E,max})$, corresponding to the displacement maximum balancing angles $\alpha_{E,max}$ of the reaction tube, corresponding to the balancing of the moment $M_R$ by the moment $M_E$ related to the maximum measured flow rate $Q_{m\,Max}$.

Also, the diameter D of the disk 24 is set in such a way that the disk rotates by $90^0$ when the tape 23 is unwound with the length $\Delta L$.

Making a common body with the disk 24 is the hub 25, their assembly being able to rotate freely in the bearings 26 placed on the two supports 27. The hub 25 is provided, perpendicular to its axis of symmetry, with a passage hole, which also acts as a sliding bearing, for a rod 28.

The rod 28 is profiled at its lower end, so that a stainless steel mini-bearing 30 is mounted on a shaft 29, fixed perpendicular to it.

On the same shaft 29, symmetrically on one side and on the other side of the mini-bearing 30, two weights 31 and 32, equal to each other, are placed, having the surfaces protected, for example Teflon, against the physical-chemical action of the measured fluid.

The rod 28 is supported by the mini-bearing 30 on the cam 33.

The reaction tube 2, corresponding to the reaction force $F_R$ (with the force arm $L_R$), develops in the flexible tape 23 the force $F_0^{P\%}$, which determines the moment of rotation $M_D^{\,P\%} = 0,5 \times F_0^{\,P\%} \times D$, of the disk 24.

The moment $M_D^{\,P\%}$, being the effect of the moment of reaction $M_R^{\,P\%} = F_R^{\,P\%} \times L_R = F_0^{\,P\%} \times L_0$ and equal to it, is balanced by the gravimetric moment, of the opponent, developed by the global apparent weight, denoted synthetically by G, of the system formed by the two weights 31 and 32, the mini-bearing 30, the shaft 29 and implicitly the rod 28, weight resulting after the correction with the Archimedean force developed by the measured fluid..

The balancing moment $M_E$, achieved by the gravimetric moment $M_G$, has the analytical expression:

$$M_E^{P\%} = M_G^{P\%} = L_G \times \sin \beta_E^{\,P\%} \times G \qquad (13)$$

where:

$L_G$ is the active length of the rod 28, which determines the gravimetric balancing moment, (respectively its length from the axis of symmetry of the hub 25, to the axis of symmetry of the shaft 29, on which the two weights 31 and 32 are placed).

The cam profile 33 (with reference to its polar coordinates $\beta_E$, $R'_c$ ) is characterized by the relationship:

$$R'_c = R_0 + \beta_E / \sin \beta_E \quad (14)$$

Since $L_G = R'_c - R_0$, (where $R_0$ is the radius of the mini-bearing 30), replacing $R'_c$ with its expression, it results:

$$L_G = \beta_E / \sin \beta_E \quad (15)$$

Replacing $L_G$ with its expression in the equation of the balancing moment $M_E$, it results:

$$M_G = M_E = \beta_E \times G \quad (16)$$

In conclusion, the gravimetric moment transducer ensures, functionally, the linear dependence of the angular displacement $\beta_E$ of the weight-bearing rod (displacement related to the balancing of the reaction moment $M_R$), both with the moment $M_R$ and with the corresponding angular displacement $\alpha_E$, of the reaction tube.

The angular displacement $\beta_E$ of the hub 25 is measured, through contactless coupling, by the sensor 34, placed outside the measured fluid. The electrical output signal from the transducer 9, corresponding to the value of the measured moment $M_R$ (by default the value of the reaction force $F_R$), is applied to the block 16, for calculating the value of the measured flow rate $Q_m$. At the output of block 16, the $Q_R$ signal is obtained to render the value of the measured flow rate $Q_m$.

The output signals of the pressure sensor 19 and the temperature sensor 20 are applied to the computing block 16 thus ensuring the correction, with the pressure and temperature, of the parameter $Q_R$ for rendering the value of calculation the measured flow rate $Q_m$.

This structural solution for achieving the flowmeter with linear reaction additionally ensures the advantages:

- The balancing angle of the maximum reaction moment $M_R$ max having a high value, respectively $\beta_E$ max = $90^0$, ensures the essential basis of obtaining a superior measurement precision.

- The moment transducer with gravinetric balancing, which can be used for aggressive and/or high-pressure fluids, implicitly ensures for the linear reaction flowmeter the same wide range of uses.

Bibliographical references.

1. HORIA MIHAI MOTIT - A method of flow measurement based on a reaction force. Reaction flowmeters; FLOMEKO 2019 18th International Flow Measurement Conference; 26-28 June 2019, Portugal

## Claims

1. Functional method of linearizing the dependence of the force exerted on the reaction element in the structure of a flow meter, on the flow rate, with the fact that it involves processing the logical sequence of stages and steps as follows:

   Stage 1 - defining the analytical bases of the method, according to the following steps;.
   Step 1 - defining the currently known reference equations, related to non-linear reaction flowmeters, from which has been developped the present method of linearizing the dependence between the mass flow rate $Q_m$ and the reaction force $F_R$ generated by it, when the fluid passes through the reaction element ( ER) of the sensitive block (BS) of the flow meter;
   **characterized by**
   Step 2- changing the role of the dependence parameter between the mass flow rate $Q_m$ and the reaction force $F_R$ generated by it, when the fluid passes through the reaction element of the flowmeter, from a constant parameter to a variable parameter depending on the value of the flow rate $Q_m$;
   Step 3- changing the role of the outlet nozzle from the Reaction Element (ER), from nozzle with constant area $A_2 =$ ct., to nozzle with variable area with flow rate $Q_m$, $A_2 = A_2 (Q_m )$;
   Step 4 - configuring of the basic structural solution of the nozzle with variable area, for the output of the Reaction Element (ER), made by the fluidic coupling of two concentric parts, the outer one,-mobile together with the reaction tube to which it belongs and the inner one immobile, fixed by the outlet connection of the flowmeter, so that the area $A_2 (Q_m )$ becomes the area of a circular crown with variable area $A_2 (\alpha_E)$ of the outlet nozzle of the reaction element, compared to the mass flow rate $Q_m$., delimited on the outside by the inner wall of the outlet of the reaction tube with diameter $D_e$ and inside by the contour of a centrally placed piece with diameter $D_i$, the method beeing implemented in two basic variants to achieve the variation of area $A_2 (\alpha_E)$, respectively:

   - with the use of an "inner linearizer", based on which, compared to the variation of the flow rate $Q_m$, the outer diameter $D_e$ of the circular crown is kept constant, and its inner diameter $D_i$, related to the inner piece, positioned centrally, called "inner linearizer" varies with it.
   - with the use of an "outer linearizer", based on which, compared to the variation of flow rate $Q_m$, the inner diameter $D_i$ of the circular crown is kept constant, related to the profile of the inner part placed centrally, and the outer diameter $D_e$, related to the inner contour of the reaction tube outlet, called " outer linearizer", it varies with it.

   **Step 5** - establishing the profile of the linearizer, in the two implementing variants specified in Step 4, respectively "inner linearizer" or "-outer linearizer", **characterized by** the coordinates $\alpha_E{}^{P\%}$, which represent the angular position of the plane of the exit section of the reaction tube, and respectively $D_L{}^{P\%}$ which represents the diameter of the linearizer, related to the plane of this section;
   Step 6 - using of that specific type of $M_R$ reaction moment transducer which, through its principle of operation, ensures the measurement of the moment of force through an angular displacement of a defined value, of their sensitive element and thus realizes functionally, in a unitary manner, the proportional dependence to the variation of the flow rate $Q_m{}^{P\%}$ of the parameters of the linear reaction flowmeters, respectively: the angular displacement $\alpha_E{}^{P\%}$ of the reaction tube, and the angular displacement $\beta_E{}^{P\%}$ of the sensitive element of the moment transducer, which ensures the balancing of the $M_R$ moment, and correlated with these, the values of the area of the outlet nozzle and of the linearizer diameter.
   Stage 2 - configuration of the basic structural scheme of flowmeters with linear reaction, according to the following steps;
   Step 1 - functional transformation of the Sensitive Block (BS) of the Primary Element (EP) of the reaction flowmeter, from a reaction tube with a constant-area outlet nozzle, into a reaction tube with a variable-area outlet nozzle, nozzle "with linearizer", so that the area $A_2$ of the outlet nozzle of the reaction element becomes variable depending on the measured flow rate $Q_m$, in that the outlet nozzle of the reaction element is made as the area of the circular crown of fluid flowing between the exit wall of the reaction tube which is mobile and a fixed inner part, centrally placed, respectively the variation of the $A_2$ area being achieved in the two implementing variants according to Step 4 of Stage 1;

Step 2 - configuring within the Sensitive Block (BS) of the flowmeter, of an Angular Positioning Block of the outlet nozzle (BPU), establishing its angular value $\alpha_E$, depending on the value $\beta_E$ of the balancing angle, by torsion or gravitational angular displacement, related to the moment transducer, which develops the balancing moment of the reaction moment;

Step 3 - configuration within the Secondary Element (ES) of the flowmeter, of a Balancing Block of the Reaction Element (BEMR), based on torsion or angular displacement of the balancing element, achievable through an elastic balancing element where $\beta_E = \alpha_E$, respectively an element with gravimetric balancing.

2. Linear reaction flow meter configured based on the functional method of linearization from claim 1, composed of a Primary Element (EP) comprising a Reference Block (BR), a Reaction Element (ER) of a Sensitive Block (BS) and respectively a Secondary Element (ES) ), which have in their structure an inlet connection (1) of the Reference Block (BR), a reaction tube (2) of the Reaction Element (ER), with which it is freely coupled through a shaft (3) that allows the rotation of the reaction tube (2) in relation to the inlet connection (1),the reaction tube being curved by $90^0$ at its other end, and an electronic block (16) respectively a pressure sensor (19), a temperature sensor (20), intended to correct the calculation flow rate with the pressure and temperature of the fluid measured from the Secondary Element (ES) component, **characterized by** the fact that it presents a new configuration of an outlet nozzle (4) of the reaction element (ER), constituted by the fluidic coupling of two concentric parts, one mobile given by the inner wall (12) of the reaction tube (2), and the other immobile (5), fixed by an output connection (6) of the flowmeter. and centrally positioned, concentric with the inner wall of the reaction tube, which ensures the discharge of the fluid through an outlet nozzle in the form of a circular crown with a variable area that directly functionally determines the proportionality of the reaction force with the measured flow rate, the circular crown being delimited on the outside, by the diameter $D_e$ of the circular inner wall (12) of the end of the tube reaction (2), and on the inside, by the diameter $D_i$ of the contour of the part (5), related to the angular position $\alpha_E$ of the plane of the area $A_2$ of the outlet nozzle (4), the variation of the area $A_2$ being ensured by the functional-constructive realization, depending on the measured flow, either of $D_i$ or of $D_e$, the parts that determine them being consequently called inner linearizer, respectively outer linearizer, part (5) being fixed to the outlet connection (6), through a rod (13) and a support (14), centrally positioned, concentric with the outer wall (12).which being part of the reaction tube (2), is mobile, and rotates with an angle given by the angular position of the plane of the outlet section of the nozzle, implicitly of its outlet area $A_2$, established under the action and proportional to the value of the reaction force $F_R$, corresponding to the current value of the measured flow rate $Q_m$, angle at which by means of an Angular Positioning Block of the outlet nozzle section (BPU) from the Sensitive Block (BS) structure, a Balancing Block of the Reaction Element (BEMR) from the Secondary Element (ES) structure of the flowmeter, achieves the balancing of the reaction moment $M_R$, with the $M_E$ moment developed, in a first variant of realization intended for measuring the flow of water or slightly aggressive gases, by a moment transducer with an elastic balancing element (10) known in itself, or in a second variant intended for measuring with superior precision the flow of fluids, including aggressive and/or high-pressure ones, by a moment transducer with a gravimetric balancing element (9).

3. Linear reaction flow meter according to claim 2, **characterized in that** the linearizer is a specially profiled part with a contour defined by its diameter $D_L(\alpha_E)$, located in the plane with the angular position $\alpha_E (Q_m^{P\%})$ of the exit section, and having the value established analytically, appropriately, depending on the angular position $\alpha_E (Q_m)$ of the plane related to the mobile exit section of the outer nozzle, linearizer that can be implemented in the structure of the flowmeter, in a first variant as an "inner linearizer", with the linearization function fulfilled by the part (5), respectively the inner linearizer, so that in the course of the flow rate variation, the outer diameter of the circular crown remains constant and the inner diameter varies with it, and respectively in a second variant as "outer liinnearizer" in which the linearization function is fulfilled by the outer wall of the circular crown, mobile together with the reaction tube (2) and the immovable inner wall of the circular crown made by part (5), with a cylindrical profile with a constant diameter, so that the circular crown has a variable inner diameter of its outer wall, respectively the "outer linearizer", and a constant diameter of its inner part (5), the immobile centrally mounted inside the outlet nozzle (4) of the reaction element (2), the contour of the linearizer being defined by its diameter $D_L(\alpha_E)$, located in the plane with the angular position $\alpha_E (Q_m^{P\%})$ of the Output Section, and having the value established analytically, accordingly, depending on the angular position $\alpha_E (Q_m)$ of the plane related to the mobile exit section of the outer nozzle.

4. Linear reaction flow meter according to claim 2, **characterized in that** for coupling with the moment transducer (9) having a gravimetric balancing element, the reaction tube (2) is provided, on the upper part, with a boss (21), with the median axis placed at a distance $L_0$ from the axis of symmetry of a shaft (3), in which a flexible stainless tape (23) rolled on a disk (24), on half its circumference, is fixed by means of a screw (22), being fixed at the its other end by the disk, in the middle zone of its circumference, the length of the tape(23) being established in such a way as to ensure the extension of its free, unrolled portion on the disk (24), with the value corresponding to the maximum balancing angular displacement of the reaction tube, corresponding to the balancing of the moment $M_R$ by the moment $M_E$ related to the maximum measured flow $Q_{m\,Mmax}$, the diameter D of the disc (24), being set in such a way that the disk rotates by 90°, when the tape (23) is unrolled with the length $\Delta L$, the disk (24) making a common body with a hub (25), their assembly being able to rotate freely in the bearings (26) placed on two supports (27) and the hub (25) is provided, perpendicular to its axis of symmetry, with a passage hole, which also acts as a sliding bearing, for a rod (28), profiled at its lower end so that, on a shaft (29), fixed perpendicular to it, a stainless steel mini-bearing (30) is mounted, ensuring so that the rod (24) rests, through the mini-bearing (30) on the cam (33) and symmetrically on one side and on the other side of the mini-bearing (30), two weights (31) and (32), equal to each other, are placed, having the surfaces protected against the physical-chemical action of the measured fluid, and the shaft (3), allows the rotation of the reaction tube (2), depending on the value of the measured flow rate $Q_m$, rotation that takes place until the angular position $\alpha_E$ is reached, corresponding to the balance of the moment of reation $M_R$ with the moment $M_E$ developed by the moment transducer with gravimetric balancing (9), as an effect of the apparent weight, of the system formed by the two weights (31) and (32), the mini-bearing (30), the shaft (29) and implicitly the rod (28), resulted after the correction made with the Archimedean force developed by the measured fluid.

5. Linear reaction flowmeter according to claim 2, **characterized in that** the Angular Positioning Block of the outlet nozzle section (BPU) is composed in the case of embodiment variant of the flowmeter with torsional balancing, from a torsion bar (11) of the moment transducer (10), rigid and co-axial coupled with the shaft (3) of rotation of the reaction tube (2), thus ensuring, implicitly, the identity between the elastic balancing angle $\beta_E$ related to the elastic torsion of the bar (11) and the rotation angle $\alpha_E$ of the reaction tube (2).

6. Linear reaction flowmeter according to claim 2, **characterized in that** the Angular Positioning Block of the outlet nozzle section (BPU) is composed in the case of embodiment of the flowmeter with gravimetric balancing from a flexible tape (23), fixed at one end by a screw (22), to a boss (21) of the reaction tube (2), then rolled on half of the circumference of a disk (24), and at its other end fixed on the disk circumference, the diameter of the disk ensuring its rotation by $90^0$, corresponding to the maximum rotation angle of the reaction tube (2), on the same shaft and rigid with it being a hub (25), their assembly being able to rotate freely in some bearings (26) positioned left, right, placed on two supports ( 27), and the hub (25) is provided, perpendicular to its axis of symmetry, with a passage hole, it also acting as a sliging bearing, for a rod (28), profiled at its lower end so that, on a shaft (29 ), fixed perpendicular to it, a stainless steel mini-bearing (30) is mounted, and symmetrically on one side and on the other side of the mini-bearing (30), two weights (31) and (32), equal to each other, are placed, having the surfaces protected, against the physical-chemical action of the measured fluid, and under the conditions in which the rod (28) rests, through the mini-bearing (30) on a specially profiled cam (33), corresponding to its polar coordinates $\beta_E$, $R'_c$ , the Angular Positioning Block (BPU) ensureing, functionally, the linear dependence of the angular displacement $\beta_E$ of the weight-bearing rod (28), displacement related to the balancing of the reaction moment $M_R$, with the moment $M_E$, respectively the corresponding angular displacement $\alpha_E$, of the tube reaction.

## Patentansprüche

1. Funktionsverfahren zur Linearisierung der Strömungsfraftabhängigkeit auf das Reaktionselement eines Durchflussmessgerats von der Durchflussrate, wobei die logische Abfolge von Stufen und Schritten wie folgt beinhaltet wird:

Stufe 1 - Definieren der analytischen Grundlagen des Verfahrens gemäß den folgenden Schritten;.
Schritt 1 - Definieren der derzeit bekannten Referenzgleichungen in Bezug auf nichtlineare Reaktionsdurchflussmesser, aus denen das vorliegende Verfahren zur Linearisierung der Abhängigkeit zwischen der Massendurchflussrate $Q_m$ und der von ihr erzeugten Reaktionskraft $F_R$ entwickelt wurde, wenn die Flüssigkeit durch das Reaktionselement (ER) des empfindlichen Blocks (BS) des Durchflussmessers strömt
**dadurch gekennzeichnet dass,**
Schritt 2 - Ändern der Rolle des Abhängigkeitsparameters zwischen der Massendurchflussrate $Q_m$ und der von ihr erzeugten Reaktionskraft $F_R$, wenn das Fluid durch das Reaktionselement des Durchflussmessers fließt, von einem konstanten Parameter in einen variablen Parameter, abhängig vom Wert der Durchflussrate $Q_m$;
Schritt 3 - Ändern der Rolle der Auslassdüse vom Reaktionselement (ER), von einer Düse mit konstanter Fläche $A_2$ = ct., zu einer Düse mit variabler Fläche mit Durchflussrate $Q_m$, $A_2 = A_2(Q_m)$;

Schritt 4 - Konfigurieren der grundlegenden Strukturlösung der Düse mit variabler Fläche für den Ausgang des Reaktionselements (ER), hergestellt durch die fluidische Kopplung zweier konzentrischer Teile, wobei das äußere, zusammen mit dem zugehörigen Reaktionsrohr beweglich ist, und das innere unbeweglich und durch den Auslassanschluss des Durchflussmessers befestigt ist, sodass die Fläche $A_2(Q_m)$, wird die Fläche einer kreisförmigen Krone mit variabler Fläche $A_2$ ($\alpha_E$) der Auslassdüse des Reaktionselements im Vergleich zur Massendurchflussrate $Q_m$, die außen durch die Innenwand des Auslasses des Reaktionsrohrs mit Durchmesser $D_e$ und innen durch die Kontur eines zentral platzierten Stücks mit Durchmesser $D_i$ begrenzt wird, wobei das Verfahren in zwei grundlegenden Varianten implementiert wird, um jeweils die Variation der Fläche $A_2$ ($\alpha_E$) zu erreichen:

- durch die Verwendung eines "inneren Linearisierers", auf dessen Grundlage der Außendurchmesser $D_e$ der kreisförmigen Krone im Vergleich zur Änderung der Durchflussrate $Q_m$ konstant gehalten wird und ihr Innendurchmesser $D_i$, bezogen auf das mittig angeordnete Innenstück, das als "innerer Linearisierer" bezeichnet wird, sich mit dieser ändert.
- durch den Einsatz eines "äußeren Linearisierers", bei dem der Innendurchmesser $D_i$ der kreisförmigen Krone, bezogen auf das Profil des mittig angeordneten Innenteils, im Verhältnis zur Veränderung der Durchflussmenge $Q_m$ konstant gehalten wird und der Außendurchmesser $D_e$, bezogen auf die Innenkontur des Reaktionsrohrauslasses, "äußerer Linearisierer" genannt, mit diesem variiert.

Schritt 5 - Festlegen des Profils des Linearisierers in den beiden in Schritt 4 angegebenen Implementierungsvarianten, jeweils "innerer Linearisierer" oder "äußerer Linearisierer", **gekennzeichnet durch** die Koordinaten $\alpha_E P\%$, die die Winkelposition der Ebene des Ausgangsabschnitts des Reaktionsrohrs darstellen, bzw. $D_L P\%$, die den Durchmesser des Linearisierers in Bezug auf die Ebene dieses Abschnitts darstellen;

Schritt 6 - Verwendung des spezifischen Typs von Reaktionsmomentwandler $M_R$, der durch sein Funktionsprinzip die Messung des Kraftmoments durch eine Winkelverschiebung ihres empfindlichen Elements um einen definierten Wert gewährleistet und so funktionell und auf einheitliche Weise die proportionale Abhängigkeit der Parameter der linearen Reaktionsdurchflussmesser von der Änderung der Durchflussrate $Q_m P\%$ realisiert, und zwar jeweils: die Winkelverschiebung $\alpha_E P\%$ des Reaktionsrohrs und die Winkelverschiebung $\beta_E P\%$ des empfindlichen Elements des Momentwandlers, was den Ausgleich des $M_R$-Moments gewährleistet, und die mit diesen korrelierten Werte der Fläche der Auslassdüse und des Linearisiererdurchmessers.

Stufe 2 - Konfiguration des grundlegenden Strukturschemas von Durchflussmessern mit linearer Reaktion gemäß den folgenden Schritten;

Schritt 1 - funktionale Umwandlung des empfindlichen Blocks (BS) des primären Elements (EP) des Reaktionsdurchflussmessers von einem Reaktionsrohr mit einer Auslassdüse mit konstanter Fläche in ein Reaktionsrohr mit einer Auslassdüse mit variabler Fläche, Düse "mit Linearisierer", sodass die Fläche $A_2$ der Auslassdüse des Reaktionselements in Abhängigkeit von der gemessenen Durchflussrate $Q_m$ variabel wird, indem die Auslassdüse des Reaktionselements als Fläche der kreisförmigen Krone der Flüssigkeit hergestellt wird, die zwischen der beweglichen Austrittswand des Reaktionsrohrs und einem festen, zentral angeordneten Innenteil fließt, bzw. die Variation der Fläche A2 wird in den beiden Implementierungsvarianten gemäß Schritt 4 von Stufe 1 erreicht;

Schritt 2 - Konfigurieren eines Winkelpositionierungsblocks der Auslassdüse (BPU) innerhalb des empfindlichen Blocks (BS) des Durchflussmessers, Festlegen seines Winkelwerts $\alpha_E$, abhängig vom Wert $\beta_E$ des Ausgleichs-winkels, durch Torsions- oder Gravitationswinkelverschiebung in Bezug auf den Momentenwandler, der das Ausgleichsmoment des Reaktionsmoments entwickelt;

Schritt 3 - Konfiguration eines Ausgleichsblocks des Reaktionselements (BEMR) innerhalb des Sekundärelements (ES) des Durchflussmessers, basierend auf der Torsion oder Winkelverschiebung des Ausgleichselements, erreichbar durch ein elastisches Ausgleichselement, wobei $\beta_E=\alpha_E$, bzw. ein Element mit gravimetrischem Ausgleich.

**2.** Linearer Reaktionsdurchflussmessgerät, konfiguriert auf der Grundlage des Funktionsverfahren zur Linearisierung aus Anspruch 1, bestehend aus einem Primärelement (EP) dass einen Referenzblock (BR) umfasst, einem Reaktionselement (ER) aus einem Sensitivblock (BS) und jeweils einem Sekundärelement (ES), die in ihrer Struktur einen Einlassanschluss (1) des Referenzblocks (BR), ein Reaktionsrohr (2) des Reaktionselements (ER), mit dem es frei über eine Welle (3) gekoppelt ist, welche die Drehung des Reaktionsrohrs (2) in Bezug auf den Einlassanschluss (1) ermöglicht, wobei das Reaktionsrohr an seinem anderen Ende um 90° gekrümmt ist, und einen elektronischen Block (16) bzw. einen Drucksensor (19), einen Temperatursensor (20) aufweisen, der dazu bestimmt ist, die berechnete Durchflussrate mit dem Druck und der Temperatur des Fluids zu korrigieren, das von der Komponente Sekundärelement (ES) gemessen wird, **dadurch gekennzeichnet dass,** es eine neue Konfiguration einer Auslassdüse (4) des Reaktionselements (ER) aufweist, die durch die fluidische Kopplung zweier konzentrischer Teile gebildet wird, von denen eines durch die Innenwand (12) des Reaktionsrohrs (2) beweglich ist, und der andere unbeweglich (5), fixiert durch einen Ausgangsanschluss (6) des Durchflussmessers. und zentral positioniert, konzentrisch zur Innenwand des Reaktionsrohrs, was den Ausstoß des Fluids durch eine Auslassdüse in Form einer kreisförmigen Krone mit variabler Fläche gewährleistet, die funktionell direkt die Proportionalität der Reaktionskraft zur gemessenen Durchflussrate bestimmt, wobei die kreisförmige Krone außen durch den Durchmesser $D_e$ der kreisförmigen Innenwand (12) des Endes des Reaktionsrohrs (2) und innen durch den Durchmesser $D_i$ der Kontur von Teil (5) begrenzt wird, bezogen auf die Winkelposition $\alpha_E$ der Ebene der Fläche $A_2$ der Auslassdüse (4), wobei die Variation der Fläche $A_2$ durch die funktionell-konstruktive Realisierung, abhängig vom gemessenen Durchfluss, entweder von $D_i$ oder von $D_e$ gewährleistet wird, die Teile, die sie bestimmen, werden folglich als innerer Linearisierer bzw. äußerer Linearisierer bezeichnet, wobei Teil (5) über eine Stange (13) und eine zentral positionierte Halterung (14) am Auslassanschluss (6) befestigt ist, konzentrisch zur Außenwand (12), die Teil des Reaktionsrohrs (2) ist, beweglich ist und sich um einen Winkel dreht, der durch die Winkelposition der Ebene des Auslassabschnitts der Düse und implizit ihrer Auslassfläche $A_2$ gegeben ist, und der unter der Einwirkung und proportional zum Wert der Reaktionskraft $F_R$ entsteht, die dem aktuellen Wert der gemessenen Durchflussrate $Q_m$ entspricht, Winkel in dem mittels eines Winkelpositionierungsblocks des Auslassdüsenabschnitts (BPU) der Struktur des empfindlichen Blocks (BS) und eines Ausgleichsblocks des Reaktionselements (BEMR) der Struktur des sekundären Elements (ES) des Durchflussmessers der Ausgleich des Reaktionsmoments $M_R$ mit dem Moment $M_E$ erreicht wird, das in einer ersten Ausführungsvariante zur Messung des Durchflusses von Wasser oder leicht aggressiven Gasen durch einen Momentenwandler mit einem an sich bekannten elastischen Ausgleichselement (10) entwickelt wird, oder in einer zweiten Variante zur Messung des Durchflusses von Fluiden, einschließlich aggressiver Fluide und/oder Fluide mit hohem Druck, mit höchster Präzision durch einen Momentenaufnehmer mit gravimetrischem Ausgleichselement (9).

3.  Linearer Reaktionsdurchflussmesser nach Anspruch 2, **dadurch gekennzeichnet, dass** der Linearisierer ein speziell profiliertes Teil mit einer Kontur ist, die durch seinen Durchmesser $D_L(\alpha_E)$ definiert ist, der sich in der Ebene mit der Winkelposition $\alpha_E$ ($Q_m^{P\%}$) des Austrittsabschnitts befindet und den analytisch ermittelten Wert aufweist, entsprechend abhängig von der Winkelposition $\alpha_E(Q_m)$ der Ebene, die sich auf den beweglichen Austrittsabschnitt der äußeren Düse bezieht, Linearisierer, der in der Struktur des Durchflussmessers implementiert werden kann, in einer ersten Variante als "innerer Linearisierer", wobei die Linearisierungsfunktion vom Teil (5) bzw. dem inneren Linearisierer erfüllt wird, so dass im Verlauf der Durchflussratenänderung der Außendurchmesser der kreisförmigen Krone konstant bleibt und der Innendurchmesser mit ihr variiert, und bzw. in einer zweiten Variante als "äußerer Linearisierer", bei dem die Linearisierungsfunktion von der Außenwand der kreisförmigen Krone erfüllt wird, die zusammen mit dem Reaktionsrohr (2) beweglich ist, und der unbeweglichen Innenwand die kreisförmige Krone, die durch Teil (5) mit einem zylindrischen Profil mit einem konstanten Durchmesser gebildet wird, sodass die kreisförmige Krone einen variablen Innendurchmesser ihrer Außenwand bzw. des "äußeren Linearisierers" und einen konstanten Durchmesser ihres inneren Teils (5) aufweist, der unbeweglich und zentral im Inneren der Auslassdüse (4) des Reaktionselements (2) montiert ist, wobei die Kontur des Linearisierers durch seinen Durchmesser $DL(\alpha E)$ definiert ist, der sich in der Ebene mit der Winkelposition $\alpha_E(Q_m^{P\%})$ des Ausgangsabschnitts befindet und dementsprechend den analytisch ermittelten Wert aufweist, abhängig von der Winkelposition $\alpha_E(Q_m)$ der Ebene, die sich auf den beweglichen Ausgangsabschnitt der äußeren Düse bezieht.

4.  Linearer Reaktionsdurchflussmesser nach Anspruch 2, **dadurch gekennzeichnet, dass** zur Kopplung mit dem Momentengeber (9) mit gravimetrischem Ausgleichselement das Reaktionsrohr (2) im oberen Teil mit einer Nabe (21) versehen ist, deren Mittelachse in einem Abstand $L_0$ von der Symmetrieachse einer Welle (3) angeordnet ist, in der ein flexibles rostfreies Band (23), das auf einer Scheibe (24) auf der Hälfte ihres Umfangs aufgerollt ist, mittels einer Schraube (22) befestigt ist, die an ihrem anderen Ende durch die Scheibe, in der mittleren ihres Umfangs, befestigt ist, wobei die Länge des Bandes (23) so eingestellt ist, dass die Ausdehnung seines freien, abgerollten Teils auf der Scheibe (24) gewährleistet ist, mit dem Wert, der der maximalen ausgleichenden Winkelverschiebung des Reaktionsrohrs entspricht, entsprechend dem Ausgleich des Moments $M_R$ durch das Moment $M_E$, bezogen auf den maximal gemessenen Durchfluss $Q_{m\ Mmax'}$ , der Durchmesser D der Scheibe (24) wird so eingestellt, dass sich die Scheibe um 90° dreht, wenn die Das Band (23) wird mit der Länge $\Delta L$ abgerollt, die Scheibe (24) bildet mit der Nabe (25) einen gemeinsamen Körper, wobei sich die Baugruppe in den auf zwei Stützen (27) angebrachten Lagern (26) frei drehen kann, und die Nabe (25) ist senkrecht zu ihrer Symmetrieachse mit einem Durchgangsloch versehen, das auch als Gleitlager für eine Stange (28) dient, die an ihrem unteren Ende so profiliert ist, dass auf einer senkrecht dazu befestigten Welle (29) ein Minilager (30) aus rostfreiem Stahl montiert wird, wodurch sichergestellt wird, dass die Stange (24) durch das Minilager (30) auf der Nocke (33) ruht. Symmetrisch auf der einen und auf der anderen Seite des Minilagers (30) sind zwei gleiche Gewichte (31) und (32) angebracht, deren Oberflächen gegen die physikalisch-chemische Einwirkung der gemessenen Flüssigkeit geschützt sind, und die Welle (3) ermöglicht die Drehung des Reaktionsrohrs (2) in Abhängigkeit vom Wert der gemessenen Durchflussrate $Q_m$, Drehung, die stattfindet, bis die Winkelposition $\alpha_E$ erreicht ist, entsprechend dem Gleichgewicht des Reaktionsmoments $M_R$ mit dem Moment $M_E$, das vom Momentengeber mit gravimetrischem Ausgleich (9) entwickelt wird, als Auswirkung des scheinbaren Gewichts des Systems, das aus den beiden Gewichten (31) und (32), dem Minilager (30), der Welle (29) und implizit der Stange (28) besteht, Ergebnis nach der Korrektur mit der von der gemessenen Flüssigkeit entwickelten archimedischen Kraft.

5. Linearer Reaktionsdurchflussmesser nach Anspruch 2, **dadurch gekennzeichnet dass** der Winkelpositionierungsblock des Auslassdüsenabschnitts (BPU) im Fall der Ausführungsvariante des Durchflussmessers mit Torsionsausgleich aus einem Torsionsstab (11) des Momentenwandlers (10) besteht, der starr und koaxial mit der Drehwelle (3) des Reaktionsrohrs (2) gekoppelt ist, wodurch implizit die Identität zwischen dem elastischen Ausgleichswinkel $\beta_E$ in Bezug auf die elastische Torsion des Stabs (11) und dem Drehwinkel $\alpha_E$ des Reaktionsrohrs (2) sichergestellt wird.

6. Linearer Reaktionsdurchflussmesser nach Anspruch 2, **dadurch gekennzeichnet dass** der Winkelpositionierungsblock des Auslassdüsenabschnitts (BPU) im Falle der Ausführungsform des Durchflussmessers mit gravimetrischem Ausgleich aus einem flexiblen Band (23) besteht, das an einem Ende durch eine Schraube (22) an einem Vorsprung (21) des Reaktionsrohrs (2) befestigt ist, dann auf die Hälfte des Umfangs einer Scheibe (24) gerollt ist und an seinem anderen Ende am Umfang der Scheibe befestigt ist, wobei der Durchmesser der Scheibe ihre Drehung um 90° gewährleistet, was dem maximalen Drehwinkel des Reaktionsrohrs (2) entspricht, auf derselben Welle und starr mit dieser ist eine Nabe (25), ihre Baugruppe kann sich frei in einigen Lagern (26) drehen, die links und rechts positioniert sind und auf zwei Trägern (27) angebracht sind, und die Nabe (25) ist senkrecht zu ihrer Symmetrieachse mit einem Durchgangsloch versehen, das auch als Gleitlager für eine Stange (28) dient, die an ihrem unteren Ende profiliert ist, so dass auf einer Welle (29), die senkrecht dazu befestigt ist, ein Minilager aus rostfreiem Stahl (30) montiert wird und symmetrisch auf der einen und auf der anderen Seite des Minilagers (30) zwei einander gleiche Gewichte (31) und (32) platziert werden, deren Oberflächen vor der physikalischchemischen Einwirkung der gemessenen Flüssigkeit geschützt sind, und unter den Bedingungen, unter denen die Stange (28) durch das Minilager (30) auf einer speziell profilierten Nocke (33) ruht, die ihren Polarkoordinaten $\beta_E$, R'$_c$ entspricht, gewährleistet der Winkelpositionierungsblock (BPU) funktionell die lineare Abhängigkeit der Winkelverschiebung $\beta_E$ der Gewichtstragstange (28), Verschiebung bezogen auf den Ausgleich des Reaktionsmoments $M_R$ mit dem Moment $M_E$ bzw. der entsprechenden Winkelverschiebung $\alpha_E$ des Reaktionrohrs.

**Revendications**

1. Procédé de linéarisation de la dépendance de la force exercée sur l'élément de réaction dans la structure d'un débitmètre, sur le débit, impliquent le traitement de la séquence logique des stades et des étapes comme suit :

   Stade 1 - définition des bases analytiques du procédé, selon les étapes suivantes ;.
   Étape 1 - définition des équations de référence actuellement connues, liées aux débitmètres à réaction non linéaires, à partir desquelles a été développée le présent procédé de linéarisation de la dépendance entre le débit massique $Q_m$ et la force de réaction $F_R$ générée par celui-ci, lorsque le fluide traverse l'élément de réaction ( ER) du bloc sensible (BS) du débitmètre
   **caractérisé en ce que;**
   Étape 2 - changement du rôle du paramètre de dépendance entre le débit massique $Q_m$ et la force de réaction $F_R$ générée par celui-ci, lorsque le fluide traverse l'élément de réaction du débitmètre, d'un paramètre constant à un paramètre variable en fonction de la valeur du débit $Q_m$ ;
   Étape 3 - changement du rôle de l'ajutage de sortie de l'élément de réaction (ER), d'un ajutage à surface constante $A_2$ = ct., à un ajutage à surface variable avec le débit $Q_m$, $A_2 = A_2 (Q_m)$ ;
   Étape 4 - Configuration de la solution structurelle de base de l'ajutage à section variable pour la sortie de l'élément de réaction (ER), réalisée par le couplage fluidique de deux parties concentriques : l'une extérieure, mobile avec le tube de réaction auquel elle appartient, et l'autre intérieure, immobile, fixée par le raccord de sortie du débitmètre, ainsi que la surface $A_2(Q_m)$ devient la surface d'une couronne circulaire à section variable $A_2(\alpha_E)$ de l'ajutage de sortie de l'élément de réaction, par rapport au débit massique $Q_m$., couronne délimitée à l'extérieur par la paroi intérieure de la sortie du tube de réaction de diamètre $D_e$ et à l'intérieur par le contour d'une pièce centrale de diamètre $D_i$. le procédé étent mis en œuvre selon deux variantes de base pour obtenir la variation de surface $A_2 (\alpha_E)$, respectivement :

      - avec l'utilisation d'un " linéariseur intérieur ", sur la base duquel, par rapport à la variation du débit $Q_m$, le

diamètre extérieur $D_e$ de la couronne circulaire est maintenu constant, et son diamètre intérieur $D_i$, par rapport à la pièce intérieure, positionnée au centre, appelée "linéariseur intérieur" varie avec lui.
- avec l'utilisation d'un "linéariseur extérieur", sur la base duquel, par rapport à la variation du débit $Q_m$, le diamètre intérieur $D_i$ de la couronne circulaire est maintenu constant, par rapport au profil de la partie intérieure placée au centre, et le diamètre extérieur $D_e$, par rapport au contour intérieur de la sortie du tube de réaction, appelé "linéariseur extérieur", varie avec lui.

Étape 5 - établissement du profil du linéariseur, dans les deux variantes de mise en œuvre spécifiées à l'étape 4, respectivement " linéariseur intérieur" ou "linéariseur extérieur", **caractérisé par** les coordonnées $\alpha_E^{P\%}$, qui représentent la position angulaire du plan de la section de sortie du tube de réaction, et respectivement $D_L^{P\%}$ qui représente le diamètre du linéariseur, par rapport au plan de cette section ;

Étape 6 - utilisation de ce type spécifique de capteur de moment de réaction $M_R$ qui, par son principe de fonctionnement, assure la mesure du moment de force par un déplacement angulaire d'une valeur définie, de leur élément sensible et réalise ainsi fonctionnellement, de manière unitaire, la dépendance proportionnelle à la variation du débit $Q_m^{P\%}$ des paramètres des débitmètres à réaction linéaires, respectivement : le déplacement angulaire $\alpha_E^{P\%}$ du tube de réaction, et le déplacement angulaire $\beta_E^{P\%}$ de l'élément sensible du capteur de moment, ce qui assure l'équilibrage du moment $M_R$, et corrélé à ceux-ci, les valeurs de la surface de l'ajutage de sortie et du diamètre du linéariseur.

Stade 2 - configuration du schéma structurel de base des débitmètres à réaction linéaire, selon les etapes suivantes ;

Étape 1 - transformation fonctionnelle du bloc sensible (BS) de l'élément primaire (EP) du débitmètre à réaction, d'un tube de réaction avec un ajutage de sortie à section constante, en un tube de réaction avec un ajutage de sortie à section variable, ajutage " avec linéariseur", de sorte que la surface $A_2$ de l'ajutage de sortie de l'élément de réaction devienne variable en fonction du débit mesuré $Q_m$, **en ce que** l'ajutage de sortie de l'élément de réaction est réalisée comme la surface de la couronne circulaire de fluide s'écoulant entre la paroi de sortie du tube de réaction qui est mobile et une partie intérieure fixe, placée au centre, respectivement la variation de la surface $A_2$ étant obtenue dans les deux variantes de mise en œuvre selon l'etape 4 du stade 1 ;

Étape 2 - configuration au sein du Bloc Sensible (BS) du débitmètre, d'un Bloc de Positionnement Angulaire de l'ajutage de sortie (BPU), établissant sa valeur angulaire $\alpha_E$, en fonction de la valeur $\beta_E$ de l'angle d'équilibrage, par torsion ou déplacement angulaire gravitationnel, lié au transducteur de moment, qui développe le moment d'équilibrage du moment de réaction ;

Étape 3 - configuration au sein de l'Elément Secondaire (ES) du débitmètre, d'un Bloc d'Équilibrage de l'Elément de Réaction (BEMR), basé sur la torsion ou le déplacement angulaire de l'élément d'équilibrage, réalisable grâce à un élément d'équilibrage élastique où $\beta_E=\alpha_E$, respectivement un élément à équilibrage gravimétrique.

2. Débitmètre à réaction linéaire configuré selon le procédé de linéarisation de la revendication 1, composé d'un élément primaire (EP) comprenant un bloc de référence (BR), un élément de réaction (ER) d'un bloc sensible (BS) et respectivement un élément secondaire (ES), qui présentent dans leur structure une connexion d'entrée (1) du bloc de référence (BR), un tube de réaction (2) de l'élément de réaction (ER), auquel il est librement accouplé par un arbre (3) permettant la rotation du tube de réaction (2) par rapport à la connexion d'entrée (1), le tube de réaction étant courbé à 90° à son autre extrémité, et un bloc électronique (16) comprenant respectivement un capteur de pression (19) et un capteur de température (20), destinés à corriger le débit calculé en fonction de la pression et de la température du fluide mesurées par l'élément secondaire (ES), **caractérisé en ce** q'ill presente une nouvelle configuration d' ajutage de sortie (4) de l'élément de réaction (ER), constituée par le couplage fluidique de deux parties concentriques, l'une mobile étant assurée par la paroi interne (12) du tube de réaction. (2), et l'autre immobile (5), fixé par une connexion de sortie (6) du débitmètre. et positionnée de manière centrale, concentrique à la paroi interne du tube de réaction, qui assure l'évacuation du fluide à travers d'une ajutage de sortie en forme de couronne circulaire à aire variable qui détermine directement fonctionnellement la proportionnalité de la force de réaction avec le débit mesuré, la couronne circulaire étant délimitée à l'extérieur par le diamètre $D_e$ de la paroi interne circulaire (12) de l'extrémité du tube de réaction (2), et à l'intérieur par le diamètre $D_i$ du contour de la pièce (5), par rapport à la position angulaire $\alpha_E$ du plan de l'aire $A_2$ l'ajutage de sortie (4), la variation de la surface $A_2$ étant assurée par la réalisation fonctionnelle-constructive, en fonction du débit mesuré, soit de $D_i$, soit de $D_e$, les pièces qui les déterminent étant par conséquent appelées linéariseur interne, respectivement linéariseur externe, la pièce (5) étant fixée au raccord de sortie (6), par l'intermédiaire d'une tige (13) et d'un support (14), centrale positionné centrale et concentriquement à la paroi extérieure (12), , qui, faisant partie du tube de réaction (2), est mobile et tourne selon un angle donné par la position angulaire du plan de la section de sortie de l'ajutage, et donc de sa surface de sortie $A_2$, établi sous l'action et proportionnel à la valeur de la force de réaction $F_R$, correspondant à la valeur actuelle du débit mesuré $Q_m$. angle auquel, grâce à un bloc de positionnement angulaire de la section de sortie de la ajutage (BPU) de la structure du bloc sensible (BS), un bloc d'équilibrage de l'élément de réaction (BEMR) de la structure de l'élément secondaire (ES) du débitmètre, équilibre le moment de réaction $M_R$ avec le moment $M_E$ développé, dans une première variante de réalisation destinée à la mesure du débit d'eau ou de gaz légèrement agressifs, par un capteur de moment doté d'un élément d'équilibrage élastique (10) connu en soi, ou dans une seconde variante destinée à la mesure avec une précision supérieure du débit de fluides, y compris agressifs et/ou à haute pression, par un transducteur de moment avec un élément d'équilibrage gravimétrique (9).

3. Débitmètre à réaction linéaire selon la revendication 2, **caractérisé en ce que** le linéariseur est une pièce spécialement profilée dont le contour est défini par son diamètre $D_L(\alpha_E)$, situé dans le plan de la position angulaire $\alpha_E(Q_m^{P\%})$ de la section de sortie, et dont la valeur est établie analytiquement, de manière appropriée, en fonction de la position angulaire $\alpha_E(Q_m)$ du plan relatif à la section de sortie mobile de l'ajutage extérieure, linéariseur qui peut être intégré à la structure du débitmètre, dans une première variante comme un "linéariseur intérieur", la fonction de linéarisation étant assurée par la pièce (5), respectivement le linéariseur interne, de sorte que, lors de la variation du débit, le diamètre extérieur de la couronne circulaire reste constant et le diamètre intérieur varie avec lui, et dans une seconde variante comme "linéariseur extérieur", la fonction de linéarisation étant assurée par la paroi extérieure de la couronne circulaire, mobile avec le tube de réaction (2) et le paroi intérieure immobile de la couronne circulaire réalisée par la partie (5), avec un profil cylindrique à diamètre constant, de sorte que la couronne circulaire a un diamètre intérieur variable de sa paroi extérieure, respectivement le " linéariseur extérieur" , et un diamètre constant de sa partie intérieure (5), l'immobile monté centralement à l'intérieur de l'ajutage de sortie (4) de l'élément de réaction (2), le contour du linéariseur étant défini par son diamètre $D_L(\alpha_E)$, situé dans le plan avec la position angulaire $\alpha_E$ $(Q_m^{P\%})$ de la Section de Sortie, et ayant la valeur établie analytiquement, en conséquence, en fonction de la position angulaire $\alpha_E(Q_m)$ du plan lié à la section de sortie mobile de l'ajutage extérieure.

4. Débitmètre à réaction linéaire selon la revendication 2, **caractérisé en ce que ,** pour le couplage avec le capteur de moment (9) ayant un élément d'équilibrage gravimétrique, le tube de réaction (2) est pourvu, sur sa partie supérieure, d'un bossage (21) dont l'axe médian est placé à une distance $L_0$ de l'axe de symétrie d'un arbre (3), dans lequel est fixé, un ruban flexible en acier inoxydable (23) enroulé sur un disque (24) , sur la moitié de sa circonférence, au moyen d'une vis (22), l'autre extrémité du ruban etent fixée par le disque, au milieu de sa circonférence, la longueur du ruban (23) etent établie de manière à assurer l'extension de sa partie libre déroulée sur le disque (24), avec la valeur correspondant au déplacement angulaire d'équilibrage maximal du tube de réaction, correspondant à l'équilibrage du moment $M_R$ par le moment $M_E$ par rapport au débit maximal mesuré $Q_{m\,Mmax}$, le diamètre D du disque (24) étant réglé de manière à ce que le disque tourne de 90°, lorsque la bande (23) est déroulée sur la longueur $\Delta L$, le disque (24) faisant corps avec un moyeu (25), leur ensemble pouvant tourner librement dans les paliers (26) placés sur deux supports (27) et le moyeu (25) est pourvu, perpendiculairement à son axe de symétrie, d'un trou de passage, qui fait également office de palier lisse, pour une tige (28), profilée à son extrémité inférieure de sorte que, sur un arbre (29), fixé perpendiculairement à celui-ci, un mini-palier en acier inoxydable (30) est monté, de sorte que la tige (24) repose, par l'intermédiaire du mini-palier (30) sur la came (33) et symétriquement d'un côté et de l'autre du mini-palier (30), deux poids (31) et (32), égaux l'un à l'autre, sont placés, ayant les surfaces protégées contre l'action physico-chimique du fluide mesuré, et l'arbre (3), permet la rotation du tube de réaction (2), en fonction de la valeur de la débit mesuré $Q_m$, rotation qui a lieu jusqu'à atteindre la position angulaire $\alpha_E$, correspondant à l'équilibre du moment de réaction $M_R$ avec le moment $M_E$ développé par le capteur de moment à équilibrage gravimétrique (9), sous l'effet du poids apparent, du système formé par les deux poids (31) et (32), le mini-palier (30), l'arbre (29) et implicitement la tige (28), résultant après la correction effectuée avec la force d'Archimède développée par le fluide mesuré.

5. Débitmètre à réaction linéaire selon la revendication 2, **caractérisé en ce que** le bloc de positionnement angulaire de la section de l'ajutage de sortie (BPU) est composé dans le cas du variante de réalisation du débitmètre avec équilibrage de torsion, d'une barre de torsion (11) du transducteur de moment (10), rigide et couplée coaxialement à l'arbre (3) de rotation du tube de réaction (2), assurant ainsi, implicitement, l'identité entre l'angle d'équilibrage élastique $\beta_E$ lié à la torsion élastique de la barre (11) et l'angle de rotation $\alpha_E$ du tube de réaction (2).

6. Débitmètre à réaction linéaire selon la revendication 2, **caractérisé en ce que** le bloc de positionnement angulaire de la section de ajutage de sortie (BPU) est constitué, dans le cas d'un débitmètre à équilibrage gravimétrique, d'un ruban flexible (23), fixé à une extrémité par une vis (22) à un bossage (21) du tube de réaction (2), puis enroulé sur la moitié de la circonférence d'un disque (24), et fixé à son autre extrémité sur la circonférence du disque, le diamètre du disque assurent sa rotation de 90°, correspondant à l'angle de rotation maximal du tube de réaction (2), sur le même arbre et solidaire de celui-ci, un moyeu (25), leur ensemblage pouvent tourner librement dans des paliers (26) positionnés à gauche, à droite et placés sur deux supports (27),et le moyeu (25) est pourvu, perpendiculairement à son axe de symétrie, d'un trou de passage servant également de palier coulissant pour une tige (28) profilée à son extrémité inférieure de manière à recevoir, sur un arbre (29) fixé perpendiculairement à celui-ci, , est monté un mini-palier (30) en acier inoxydable, et symétriquement d'un côté et de l'autre du mini-palier (30), deux poids (31) et (32), égaux entre eux, sont placés, ayant les surfaces protégées, contre l'action physico-chimique du fluide mesuré, et dans les conditions dans lesquelles la tige (28) repose, par l'intermédiaire du mini-palier (30) sur une came spécialement profilée (33), correspondant à ses coordonnées polaires $\beta_E$, $R'_c$, le Bloc de Positionnement Angulaire (BPU) assurant, fonctionnellement, la dépendance linéaire du déplacement angulaire $\beta_E$ de la tige porteuse (28), déplacement lié à l'équilibrage du moment de réaction $M_R$, avec le moment $M_E$, respectivement le déplacement angulaire correspondant $\alpha_E$, du tube de reaction.

EP 4 471 385 B1

**PRIMARY ELEMENT - (EP)**

**SECONDARY ELEMENT - (ES)**

**BALANCING BLOCK OF THE REACTION MOMENT $M_R$ BY THE BALANCING MOMENT $M_E$ - (BEMR)**

ensured by twisting, or angular displacement with balancing angle $\beta_E$, of the balancing element)

Achieved by a Moment Transducer, in:

**Variant no. 1**
Transducer with elastic balancing
(where $\beta_E \equiv \alpha_E$)

**Variant no. 2**
Transducer with gravimetric balancing

$M_E = C \times \beta_E = M_R$

$\beta_E(Q_m)$

($\beta_E$ - corresponding angle developed by the moment transducer)

**COMPUTING BLOCK - (BC) of the Rendering Parameter $Q_R$, of the measured flow rate $Q_m$**

$Q_R$

Temperature sensor — T

Pressure sensor — p

**SENSITIVE BLOCK - (BS)**

$X_C$ = Characteristic parameter

where:
$X_C = M_R = F_R \times L_R$
for:
$F_R = C \times \rho^{-1} \times Q_m$

**LINEAR REACTION ELEMENT - (ER) (mobile)**

Its sub-blocks involvement to parameter $K_1$ establishing, variable with $Q_m$

$K_1^{P\%} = (100 \times K_1^{100\%}) / (P \times Q_m^{100\%})$

$A_2^{P\%} = A_2(\alpha_E^{P\%}) = A_2(Q_m^{P\%})$

$A_1$

**OUTLET NOZZLE ("CIRCULAR CROWN") WITH VARIABLE AREA, $A_2(\alpha_E)$** achieved, in:

**Variant no. 1:**
- Outer wall of its circular crown (Mobile) with diameter $D_e$ = constant
- Inner wall of its circular crown ("inner linearizer") Immobile, with diameter: $D_i(\alpha_E^{P\%}) = D_{Li}^{P\%} = D_{Li}(\alpha_E^{P\%}) = D_{Li}(Q_m^{P\%})$ = variable

**Variant no. 2:**
- Outer wall of its circular crown ("outer linearizer") Mobile, with diameter: $D_e(\alpha_E^{P\%}) = D_{Le}^{P\%} = D_{Le}(\alpha_E^{P\%}) = D_{Le}(Q_m^{P\%})$ = variable
- Inner wall of its circular crown (Immobile), with diameter $D_i$ = constant

**REACTION TUBE, with inlet area:**

**ANGULAR POSITIONING BLOCK OF THE OUTLET NOZZLE SECTION - (BPU)**

$\beta_E(Q_m)$

$\alpha_E^{P\%} = \alpha(Q_m^{P\%})$

$X_V$ = **Variable parameter**
where: $X_V = v$ - fluid velocity

**REFERENCE BLOCK - (BR)**

functionally ensures:
$X_R$ = Reference parameter = constant
where:
$X_R = A_1$ = inlet area of "Reaction tube"

Achieved by:
Inlet connection of flowmeter (Imobile)

$Q_m$

FIG. 1

21

$$M_R^{P(\%)} = F_R^{P(\%)} \times L_R$$

$L_R$

$F_R^{P(\%)}$

2

$\alpha_E^{Max}$

$\alpha_E^{P\%}$

3

6

$Q_m$

1

4

$M_E^{P(\%)} = C_E \times \beta_E^{P(\%)}$

$Q_m$

11

7

$\beta_E^{P(\%)}$

**(BPU)**
for angle $\alpha_E$

10

**OUTLET NOZZLE DETAIL** (longitudinal section)

**Variant no. 1** (with inner linearizer)

2

5

$D_e$ = constant

$\alpha_E^{P\%}$

$(\alpha^{0\%}$ for $Q_m = 0)$

$D_i(\alpha_E^{P\%}) = D_{Li}^{P\%} =$
$= D_{Li}(\alpha_E^{P\%}) = D_{Li}(Q_m^{P\%}) =$
= variable

6

**Variant no. 2** (with outer linearizer)

2

5

$\alpha_E^{P\%}$

$(\alpha^{0\%}$ for $Q_m = 0)$

$D_e(\alpha_E^{P\%}) = D_{Le}^{P\%} =$
$= D_{Le}(\alpha_E^{P\%}) = D_{Le}(Q_m^{P\%}) =$
= variable

$D_i$ = constant

6

FIG. 2

EP 4 471 385 B1

FIG. 3

OUTLET NOZZLE DETAIL (longitudinal section)

Variant no. 1 (with inner linearizer)

$D_i(\alpha_E^{P\%}) = D_{Li}^{P\%} =$
$= D_{Li}(\alpha_E^{P\%}) = D_{Li}(Q_m^{P\%}) =$
= variable

$D_e$ = constant

$\alpha_E^{P\%}$

($\alpha^{0\%}$ for $Q_m = 0$)

Variant no. 2 (with outer linearizer)

$D_e(\alpha_E^{P\%}) = D_{Le}^{P\%} =$
$= D_{Le}(\alpha_E^{P\%}) = D_{Le}(Q_m^{P\%}) =$
= variable

$D_i$ = constant

$\alpha_E^{P\%}$

($\alpha^{0\%}$ for $Q_m = 0$)

$M_E^P(\%) = C_G \times \beta_E^P(\%)$

(BPU)
for angle $\alpha_E$

$M_R^P(\%) = F_0^P(\%) \times L_0 = F_R^P(\%) \times L_R$

$L_0 = F_0^P(\%)$

$L_R$

$F_R^{P(\%)}$

$\alpha_E^{Max}$

$\alpha_E^{P\%}$

FIG. 4

FIG. 5

FIG. 6

EP 4 471 385 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4001856 A

- WO 9702470 A1

**Non-patent literature cited in the description**

- **HORIA MIHAI MOTIT**. A method of flow measurement based on a reaction force. Reaction flowmeters. *FLOMEKO 2019 18th International Flow Measurement Conference*, 26 June 2019